# EUROPEAN PATENT APPLICATION

(11) **EP 4 746 466 A1**
(43) Date of publication of application: **20.05.2026**
(21) Application number: 23945372.3
(22) Date of filing: 14.07.2023
(51) Int. Cl.: H04W 8/24

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: XU, Yang, Dongguan, Guangdong 523860 (CN)
(74) Representative: Grassi, Stefano
(86) International application number: PCT/CN2023/107583
(87) International publication number: WO 2025/015475

(57) **Abstract**

Provided are communication methods, devices, a computer readable storage medium, a computer program product, and a computer program. The method includes: a first terminal transmitting first information, the first information being used to request allocation of UE policies related to a UE policy of another terminal; and the first terminal receiving second informationthe second information including UE policies of the first terminal, and the UE policies of the first terminal being related to UE policies of a second terminal.

## Description

### TECHNICAL FIELD

The present disclosure relates to the field of communications, and more particularly, to communication methods and devices, a computer-readable storage medium, a computer program product, and a computer program.

### BACKGROUND

With the development and popularization of electronic devices, there are many different types of terminals for users to use, and various types of terminals have their own advantages, and a same user may use different electronic devices on different occasions. However, how to make a same service switched between different terminals and achieve the effect of multi-terminal collaboration on different devices has become a problem that is required to be solved.

### SUMMARY

Embodiments of the present disclosure provide communication methods and devices, as well as a computer-readable storage medium, a computer program product and a computer program.

An embodiment of the present disclosure provides a communication method, including that:
a first terminal transmits first information, the first information being configured to request allocation of user equipment (UE) policies related to UE policies of other terminals; and
the first terminal receives second information, the second information including UE policies of the first terminal, and the UE policies of the first terminal being related to UE policies of the second terminal.

An embodiment of the present disclosure provides a communication method, including that:
a first network device receives first information, the first information being configured to request allocation of user equipment (UE) policies related to UE policies of other terminals for a first terminal; and
the first network device transmits second information, the second information including UE policies of the first terminal, and the UE policies of the first terminal being related to UE policies of a second terminal.

An embodiment of the present disclosure provides a communication method, including that:
a second terminal transmits an indication of a first capability, the indication of the first capability being configured to indicate that the second terminal has the first capability, and the first capability including at least one of: a capability to support or allow allocation of UE policies related to UE policies of the second terminal to other terminals, and a capability to support or allow allocation of UE policies related to UE policies of other terminals to the second terminal.

An embodiments of the present disclosure provides a communication method, including that:
a second network device receives an indication of a first capability of a second terminal, the indication of the first capability indicating that the second terminal has the first capability, and the first capability including at least one of: a capability to support or allow allocation of UE policies related to UE policies of the second terminal to other terminals, and a capability to support or allow allocation of UE policies related to UE policies of other terminal to the second terminal.

An embodiment of the present disclosure provides a first terminal, including:
a first communication unit, configured to: transmit first information, the first information being configured to request allocation of UE policies related to UE policies of other terminals; and receive second information, the second information including UE policies of the first terminal, the UE policies of the first terminal being related to UE policies of a second terminal.

An embodiment of the present disclosure provides a first network device, including:
a second communication unit, configured to: receive first information that is configured to request allocation of UE policies related to UE policies of other terminals for a first terminal; and transmit second information which includes UE policies of the first terminal, the UE policies of the first terminal being related to UE policies of a second terminal.

An embodiment of the present disclosure provides a second terminal, including:
a third communication unit, configured to transmit an indication of a first capability, the indication of the first capability being configured to indicate that the second terminal has the first capability, and the first capability including at least one of: a capability to support or allow allocation of UE policies related to UE policies of the second terminal to other terminals, and a capability to support or allow allocation of UE policies related to UE policies of other terminals to the second terminal.

An embodiment of the present disclosure provides a second network device, including:
a fourth communication unit is configured to receive an indication of a first capability of a second terminal, the indication of the first capability indicating that the second terminal has the first capability, and the first capability including at least one of: a capability to support or allow allocation of UE policies related to UE policies of the second terminal to other terminals, and a capability to support or allow allocation of UE policies related to UE policies of other terminals to the second terminal.

An embodiment of the present disclosure provides a first terminal, including a transceiver, a processor, and a memory. The memory is configured to store a computer program, the transceiver is configured to communicate with other devices, and the processor is configured to call and run the computer program stored in the memory to cause the first terminal to perform the above-described method.

An embodiment of the present disclosure provides a first network device, including a transceiver, a processor, and a memory. The memory is configured to store a computer program, the transceiver is configured to communicate with other devices, and the processor is configured to call and run the computer program stored in the memory to cause the first network device to perform the method described above.

An embodiment of the present disclosure provides a second terminal, including a transceiver, a processor, and a memory. The memory is configured to store a computer program, the transceiver is configured to communicate with other devices, and the processor is configured to call and run the computer program stored in the memory to cause the second terminal to perform the above-described method.

An embodiment of the present disclosure provides a second network device, including a transceiver, a processor, and a memory. The memory is configured to store a computer program, the transceiver is configured to communicate with other devices, and the processor is configured to call and run the computer program stored in the memory to cause the second network device to perform the method described above.

An embodiment of the present disclosure provides a chip for implementing the above method.

Specifically, the chip includes a processor for calling and running a computer program from a memory so that a device on which the chip is mounted performs the above-described method.

An embodiment of the present disclosure provides a computer-readable storage medium for storing a computer program that causes the device to execute the above-described methods when the computer program is executed a device.

An embodiment of the present disclosure provides a computer program product including computer program indications that cause a computer to perform the methods described above.

An embodiment of the present disclosure provides a computer program that, when run on a computer, causes the computer to perform the above-described methods.

By adopting the solution provided by the present embodiment, the first terminal may request to allocate UE policies related to the UE policy of another terminal by transmitting the first information, and the first terminal may then receive the second information including the UE policies of the first terminal related to the UE policies of the second terminal. In this way, by allocateing the UE policies related to the second terminal to the first terminal, it is possible to realize migration of at least part of the services of the second terminal to different devices, thereby realizing the effect of cooperating with the same service on a plurality of devices, and ensuring that the communication capability remains unchanged or optimized while realizing the service migration, thereby ensuring business continuity.

### BRIEF DESCRIPTION OF THE DRAWINGS

FIG. 1 is a schematic diagram of an application scenario according to an embodiment of the present disclosure.
FIG. 2 is a schematic diagram of a 5GC-based system.
FIG. 3 is a schematic flowchart of a UCU defined by a UE policy through 3GPP.
FIG. 4 is a schematic diagram of a QoS mechanism in a network architecture of a related protocol.
FIG. 5 is a schematic diagram of a scene in which the same user uses different electronic devices on different occasions.
FIG. 6 is a schematic flowchart of a communication method according to an embodiment of the present disclosure.
FIG. 7 is a schematic flow chart of a communication method according to another embodiment of the present disclosure.
FIG. 8 is a schematic flowchart of a communication method according to another embodiment of the present disclosure.
FIG. 9 is a schematic flow chart of a communication method according to another embodiment of the present disclosure.
FIG. 10 is a schematic diagram of a scenario of UE policy allocation according to an embodiment of the present disclosure.
FIGS. 11 to 14 are various exemplary flowcharts of processing flows of the communication methods according to the embodiments of the present disclosure.
FIG. 15 is a schematic block diagram of a first terminal according to an embodiment of the present disclosure.
FIG. 16 is a schematic block diagram of a first network device according to an embodiment of the present disclosure.
FIG. 17 is a schematic block diagram of a second terminal according to an embodiment of the present disclosure.
FIG. 18 is a schematic block diagram of a second network device according to an embodiment of the present disclosure.
FIG. 19 is a schematic block diagram of a communication device according to an embodiment of the present disclosure.
FIG. 20 is a schematic block diagram of a chip according to an embodiment of the present disclosure.
FIG. 21 is a schematic block diagram of a communication system according to an embodiment of the present disclosure.

### DETAILED DESCRIPTION

Hereinafter, the technical solutions in the embodiments of the present disclosure will be described with reference to the drawings in the embodiments of the present disclosure.

The technical solutions of the embodiments of the present disclosure can be applied to various communication systems, such as: a Long Term Evolution (LTE) system, an Advanced long term evolution (LTE-A) system, a New Radio (NR) system, an evolution system of an NR system, an LTE-based access to unlicensed spectrum (LTE-U) system, and an NR-based access to unlicensed spectrum (NR-U) system, a Non-Terrestrial Networks (NTN) system, a Universal Mobile Telecommunication System (UMTS), Wireless Local Area Networks (WLAN), Wireless Fidelity (WiFi), Fifth-Generation (5G) systems or other communication systems, etc.

Generally speaking, a conventional communication system supports a limited number of connections and is easy to implement, however, with the development of communication technology, mobile communication systems will support not only conventional communication, but also, for example, device-to-device (D2D) communication, machine-to-machine (M2M) communication, Machine Type Communication (MTC), vehicle-to-vehicle (V2V) communication, or vehicle-to-everything (V2X) communication, etc., and the embodiments of the present disclosure can also be applied to these communication systems. In a possible implementation, the communication system in the embodiments of the present disclosure may be applied to a Carrier Aggregation (CA) scenario, a Dual Connectivity (DC) scenario, or a Standalone (SA) network layout scenario. In a possible implementation, the communication system in the embodiments of the present disclosure may be applied to an unlicensed spectrum which may also be considered as a shared spectrum; alternatively, the communication system in the embodiments of the present disclosure may also be applied to a licensed spectrum which may also be regarded as a non-shared spectrum.

Embodiments of the present disclosure describe various embodiments in conjunction with a network device and a terminal device. The terminal device may also be referred to as a User Equipment (UE), an access terminal, a user unit, a user station, a mobile station, a remote station, a remote terminal, a mobile device, a user terminal, a terminal, a wireless communication device, a user agent or a user device, and the like. The terminal device may be a station (STAION, ST) in WLAN, may be a cellular phone, a cordless phone, a Session Initiation Protocol (SIP) phone, a Wireless Local Loop (WLL) station, a Personal Digital Assistant (PDA) device, a handheld device with wireless communication capabilities, a computing device or other processing device connected to a wireless modem, an in-vehicle device, a wearable device, a terminal device in a next generation communication system such as an NR network, or a future evolved Public Land Mobile Network (PLMN) network, or the like. In the embodiments of the present disclosure, the terminal device may be deployed on land, including indoor or outdoor, handheld, wearable, or vehicle-mounted; it can also be deployed on the water (such as ships, etc.); it can also be deployed in the air (e.g. on aircraft, balloons and satellites, etc.). In the embodiments of the present disclosure, the terminal device may be a Mobile Phone (Mobile Phone), a tablet (Pad), a computer with a wireless transceiver function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like. As an example and not limitation, in the embodiments of the present disclosure, the terminal device may also be a wearable device. Wearable devices can also be called wearable smart devices, which are a general term for wearable devices which are daily wear intelligently designed and developed based on wearable technology, such as glasses, gloves, watches, clothing and shoes. A wearable device is a portable device that is worn directly on the body or integrated into the user's clothes or accessories. Wearable devices are not only hardware devices, but also realize powerful functions through software support, data interaction and cloud interaction. Generalized wearable smart devices include full functions, large size, and can realize complete or partial functions without relying on smart phones, for example, such wearable smart devices can be smart watches or smart glasses, and the wearable smart devices may only focus on a certain type of application function and need to be used in conjunction with other devices such as smart phones, for example, such wearable smart devices can be various types of smart bracelets and smart jewelry for physical sign monitoring.

In the embodiments of the present disclosure, the network device may be a device for communicating with a mobile device. The network device may be an Access Point (AP) in WLAN, a base station (BTS) in GSM or CDMA, a base station (NodeB, NB) in WCDMA, an evolutional Node B, eNB or eNodeB in LTE, a relay station or an Access Point, a vehicle-mounted device, a wearable device, a network device (gNB) in an NR network, a network device in a future evolution PLMN network, or a network device in an NTN network, or the like. By way of example and not limitation, in the embodiments of the present disclosure, the network device may have mobile characteristics, for example, the network device may be a mobile device. Alternatively, the network device may be a satellite or a balloon station. For example, the satellite may be a low earth orbit (LEO) satellite, a medium earth orbit (MEO) satellite, a geostationary earth orbit (GEO) satellite, a High Elliptical Orbit (HEO) satellite, or the like. Optionally, the network device may be a base station provided in a land area, a water area, or the like. In the embodiments of the present disclosure, the network device may provide a service for a cell, and the terminal device may communicate with the network device through a transmission resource (for example, a frequency domain resource or a spectrum resource) used by the cell. The cell may be a cell corresponding to the network device (for example, a base station), and the cell may belong to a macro base station or a base station corresponding to a Small cell. The small cell may include a Metro cell, a Micro cell, a Pico cell, a Femto cell or the like. Such small cells are characterized with small coverage and low transmit power, and are suitable for providing data transmission services with high speed.

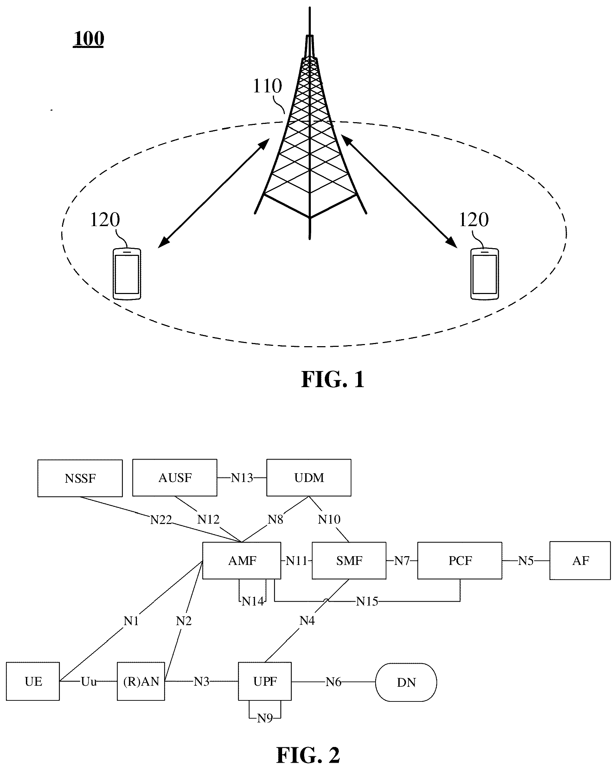

FIG. 1 exemplarily illustrates a communication system 100. The communication system includes a network device 110 and two terminal devices 120. In a possible implementation, the communication system 100 may include a plurality of network devices 110, and the coverage range of each network device 110 may include another number of terminal devices 120, which is not limited in the embodiments of the present disclosure. In a possible implementation, the communication system 100 may further include other network entities such as a Mobility Management Entity (MME), an Access and Mobility Management Function (AMF), and the like, which are not limited by the embodiments of the present disclosure. The network device may further include an access network device and a core network device. That is, the wireless communication system further includes a plurality of core networks for communicating with access network devices. The access network device may be an evolutional node B (eNB or e-NodeB), a macro base station, a micro base station (also referred to as a "small base station"), a pico base station, an access point (AP), a transmission point (TP) or a new generation Node B (gNodeB), or the like in a long-term evolution (LTE) system, a next generation (NR) system or an authorized auxiliary access long-term evolution (LAA-LTE) system. It should be understood that a device having a communication function in the network/system in the embodiments of the present disclosure may be referred to as a communication device. Taking the communication system illustrated in FIG. 1 as an example, the communication device may include a network device and a terminal device having a communication function, and the network device and the terminal device may be specific devices in the embodiments of the present disclosure, and will not be described herein. The communication device may also include other devices in the communication system, such as a network controller, a mobility management entity and other network entities, which are not limited in the embodiments of the present disclosure.

In order to facilitate understanding of the embodiments of the present disclosure, the following will briefly describe basic procedures and basic concepts related to the embodiments of the present disclosure. It should be understood that the basic procedures and basic concepts as described below do not limit the embodiments of the present disclosure.

An architecture diagram of a 5G network system is shown in FIG. 2, which includes: a Network Slice Selection Function (NSSF) which is mainly used for managing information related to network slices, such as selecting network slices for terminal devices; an Authentication Server Function (AUSF) which is used to complete the identity authentication function for user access; a Unified Data Management (UDM) which is used to manage and store contract data and authentication data; AMF (Access and Mobility Management Function) which is used to complete mobility management, security anchor point and security UE policy management, etc, and in addition to mobility management for a user equipment (UE), which is also responsible for forwarding session management related messages between the UE and an SMF; a Session Management Function (SMF) which is used to complete session management, UE IP address allocation and management, etc.; a Policy Control Function (PCF) which is responsible for formulating policies related to mobility management, session management, billing, etc. for the UE; AF (Application Function) which is used for external application servers; a User Plane Function (UPF) which is used for complex user plane processing, such as forwarding traffic between the wireless access network and the Internet, reporting traffic usage, QoS (Quality of Service) policy implementation, etc.; a Data Network (DN) which is a 5GC external Data Network (such as the Internet, etc.). Data transmission is performed between nodes of a 5G core network (5G), between a UE and a 5GC node, between a UE and a Radio Access Network (RAN), and between a RAN and a 5GC node through corresponding interfaces, respectively. For example, as shown in FIG. 2, data transmission is performed between the AMF and the NSSF in the 5GC through an N22 interface; data transmission is performed between the AMF and the SMF through an N11 interface; data transmission is performed between the AMF and the AUSF through N12; data transmission between the AMF and the UDM is carried out through an N8 interface. Data transmission between the SMF and the UPF is carried out through an N4 interface. Data transmission between the UPF and an external data network is carried out through an N6 interface, and Data transmission between the UPF and AN is carried out through an N3 interface. The UE performs access layer connection with the AN through a Uu port to exchange access layer messages and carry out wireless data transmission, and the UE performs non-access layer (NAS) connection with the AMF through an N1 port to exchange NAS messages. Data transmission is performed between the RAN and the AMF through an N2 interface, and data transmission is performed between the RAN and the UPF through an N3 interface. It should be understood that only some interfaces between nodes have been described above, and other interfaces between other 5GC nodes in FIG. 2 will not be repeatedly described.

The UE policies in the related art may include various policies such as Access Network Discovery and Selection Policy (ANDSP), UE RoutE Selection Policy (URSP), and the like. The ANDSP may include selection information (optional) of WLAN Selection Policy (WLANSP) and Evolevd Packet Data Gateway (ePDG)/ Non-3GPP InterWorking Function (N3IWF) network elements.

Take the WLANSP policy as an example:
WLANSP may include rule 1 which includes:
- Priority 1;
- Validity Conditions (Public Land Mobile Network 1)( PLMN 1);
- Group of Selection Criteria with priority 1:
   - Preferred Service Set Identifier (SSID)List = Priority 1: myoperator1, Priority 2: myoperator2;
   - MinimumBackhaulThreshold = 2Mbps in the downlink;
- Group of Selection Criteria with priority 2:
   - PreferredSSIDList = Priority 1: myoperator3.

WLANSP may include rule 2 which includes:
- Priority 2;
- Validity Conditions (PLMN 1);
- Group of Selection Criteria with priority 1:
   - PreferredRoamingPartnerList = Priority 1: partner1.com, Priority 2: partner2.com;
   - MaximumBSSLoad=60.

As shown in Table 1 below, the Traffic Descriptor in the URSP is used to describe a specific service. For example, the microblog service may be described by IP @ 1 to 9. Another example is that the IP Multimedia Subsystem (IMS) service can be described by the Data Network Name (DNN) in the URSP. As shown in Table 2 below, there may be one or more Route Selection Descriptors (RSDs) under a traffic descriptor, and each RSD corresponds to an attribute of a PDU session (which may include, for example, at least one of: route selection descriptor precedence, route selection component, SSC mode selection, network slice selection, DNN selection, PDU session type selection, non-seamless offload indication, access type preference, route selection validation criteria, time window, and location criteria, etc. in Table 2). Namely, the traffic data corresponding to the traffic descriptor may be transmitted in the PDU session corresponding to the RSD.

**Table 1**

| Information name | Description | Category | PCF permitted to modify in a UE context | Scope |
|---|---|---|---|---|
| Rule Precedence | Determines the order the URSP rule is enforced in the UE. | Mandatory | Yes | UE context |
| Traffic descriptor | This part defines the Traffic descriptor components for the URSP rule. | Mandatory | | |
| Application descriptors | It consists of Operating Systerm Identity (OSId) and Operating System Application Identity (OSAppId) | Optional | Yes | UE context |
| IP descriptors | Destination IP 3 tuple(s) (IP address or Internet Protocol Version 6 (IPv6) network prefix, port number, protocol ID of the protocol above IP). | Optional | Yes | UE context |
| Domain descriptors | Destination fully qualified domain names (FQDN(s)) | Optional | Yes | UE context |
| Non-IP descriptors | Descriptor(s) for destination information of non-IP traffic | Optional | Yes | UE context |
| (Data Network Name (DNN) | This is matched against the DNN information provided by the application. | Optional | Yes | UE context |
| Connection Capabilities | This is matched against the information provided by a UE application when it requests a network connection with certain capabilities. (Note: 4) | Optional | Yes | UE context |
| List of Route Selection Descriptors | A list of Route Selection Descriptors. The components of a Route Selection Descriptor are described in table 6.6.2.1-3. | Mandatory | | |

**Table 2**

| Information name | Description | Category | PCF permitted to modify in URSP | Scope |
|---|---|---|---|---|
| Route Selection Descriptor Precedence | Determines the order in which the Route Selection Descriptors are to be applied. | Mandatory | Yes | UE context |
| Route selection components | This part defines the route selection components | Mandatory | | |
| SSC Mode Selection | One single value of SSC mode. | Optional | Yes | UE context |
| Network Slice Selection | Either a single value or a list of values of S-NSSAI(s). | Optional | Yes | UE context |
| DNN Selection | Either a single value or a list of values of DNN(s). | Optional | Yes | UE context |
| PDU Session Type Selection | One single value of PDU Session Type | Optional | Yes | UE context |
| Non-Seamless Offload indication | Indicates if the traffic of the matching application is to be offloaded to non-3GPP access outside of a PDU Session. | Optional | Yes | UE context |
| Access Type preference | Indicates the preferred Access Type (3GPP or non-3GPP or Multi-Access) when the UE establishes a PDU Session for the matching application. | Optional | Yes | UE context |
| Route Selection Validation Criteria | This part defines the Route Validation Criteria components | Optional | | |
| Time Window | The time window when the matching traffic is allowed. The RSD is not considered to be valid if the current time is not in the time window. | Optional | Yes | UE context |
| Location Criteria | The UE location where the matching traffic is allowed. The RSD rule is not considered to be valid if the UE location does not match the location criteria. | Optional | Yes | UE context |

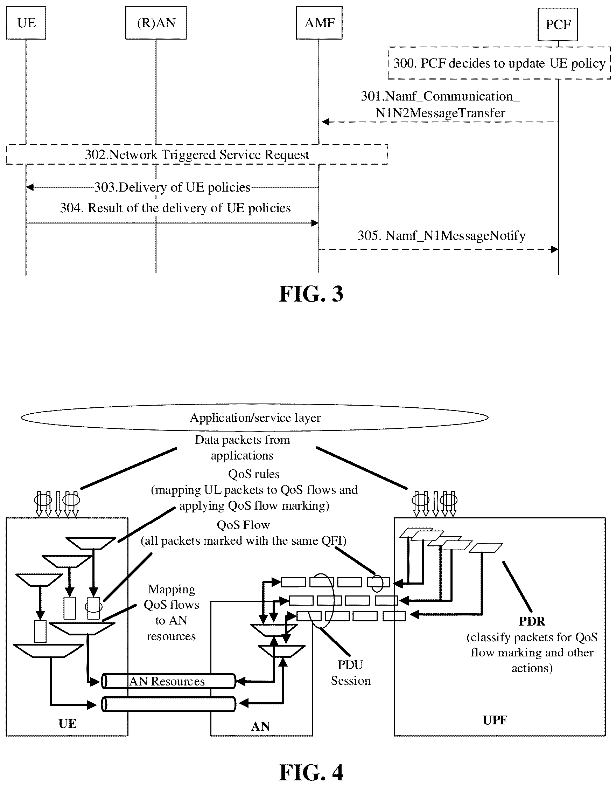

A UE Policy is implemented by the UCU (UE Configuration Update) defined by 3GPP. As shown in FIG. 3, PCF puts the Policy to be updated in a Container and transmits it to AMF, and the AMF directly forwards it to UE using an NAS message.

In steps 300-301: when PCF on the network side decides to update UE policy, the PCF places the UE policy in a container and transmits it to AMF, and the container of the UE policy may be transmitted from the PCF to the AMF through an N1 N2 interface communication message transfer message (Namf_Communication_N1N2 MessageTransfer).

If the UE is in an idle state, the AMF is required to initiate a Network Triggered Service Request in step 302 to cause the UE to enter a connected state, and then step 303 is performed.

In step 303: the AMF transmits the UE policy (Delivery of UE policies) to the UE, specifically, the AMF transparently transmits the container carrying the UE policy to the UE using a downlink NAS message.

In steps 304-305: after receiving the UE policy, the UE replies a result (Result of the delivery of UE policies) (for example, indicating whether the transmission is successful or not) to the network, and the AMF further transparently transmits the transmission result to the PCF through an N1 interface notification message (Namf_N1 MessageNotify), and the transmission result is transmitted through the container, and the AMF performs transparent transmission.

The UE associates an application to a PDU session for transmission based on the URSP, and the mechanism is as follows.

When data appears in the application layer, the UE uses the URSP rules in the URSP to check whether the characteristics of application data match the Traffic Descriptor of a certain rule in the URSP rules, and the order of checking is determined according to the Precedence in the Traffic Descriptors in the URSP rules, that is, the UE sequentially checks the matching situation based on the precedence, and when the feature of the application data matches with a URSP rule, the RSD list under the URSP rule is used to bind the PDU session.

When there is a matching URSP rule, the UE searches for a suitable PDU session according to the Precedence in RSD. Here, the RSD with high precedence is preferentially used. If a certain parameter in the RSD has one or more values, the UE selects one of the parameters to combine with other parameters to search for whether a PDU session exists or not, and if the PDU session exists, the UE binds the application data to the PDU session for transmission. If the PDU session does not exist, the UE triggers establishment of the PDU session, and the UE reports attribute parameters of the PDU session through an establishment request message. If the session is successfully established, the UE binds the application data to the session for transmission; if the session establishment is unsuccessful, the UE searches again for whether or not a PDU session exists based on other parameter combinations in the RSD or using a parameter combination in RSD with secondary precedence.

If a suitable PDU session cannot be found for binding according to the matching URSP rule, the UE searches for whether the TrafficDescriptor in the URSP rule with secondary precedence can match the characteristics of the application data according to the Precedence, and when they can match, the UE repeats the previously described process.

The above process of finding a suitable PDU session for an application is called "evaluation". When a suitable PDU session is found for binding, the UE will re-perform evaluation under the following circumstances to check whether it is needed to change the binding relationship between the original application data and the PDU session: the URSP is updated by the PCF; the UE moves from EPC to 5GC; change of Allowed NSSAI or Configured NSSAI; change of LADN DNN availability; UE registers over 3GPP or non-3GPP access; and UE establishes a connection to a WLAN access.

The QoS mechanism in the network architecture of the related protocol is that a core network element (SMF) determines a PCC rule based on policy information, subscription information, and a local configuration, and generates a QoS Rule, a Packet Detection Rule (PDR), and a QoS parameter based on the PCC rule. The QoS Rule is used on a UE side to bind an uplink service data flow with a QoS flow (flow), the PDR is used on a UPF side to bind a downlink service data flow with a QoS flow, and the QoS parameter is used to generate parameters used by each QoS flow. The QoS parameters may be sent to the RAN side to generate a DRB corresponding to the QoS flow, ensuring the end-to-end (the air interface and the core network side) transmission quality. Referring to FIG.4, in uplink transmission, a UE receives data packets from an application program, maps the uplink data packets to a QoS flow based on a QoS rule and applies a QoS flow mark, and then the UE marks all data packets of the QoS flow with the same QFI, maps the QoS flow to an AN resource, and transmits it to an AN. An RAN (i.e., the AN shown in FIG.4) converts the QoS flow mapped to the AN resource (i.e., the AN resource corresponding to each QoS flow generated by the AN based on the QoS parameter) into a PDU session and transmits it to a UPF. In downlink transmission, the PDF side receives data packets from the application program, marks the QoS flow based on the PDR and classifies the data packets based on other operations, marks all data packets of the QoS flow with the same QFI, combines the QoS flow into a PDU Session, transmits the PDU Session to the RAN (i.e., the AN shown in FIG.4), and the RAN side transmits the received Protocol Data Unit (PDU) Session to the UE side through the AN resource.

With the development and popularization of electronic devices, there are many different types of terminals for users, and various types of terminals have their own advantages. For example, as shown in FIG. 4, users may have multiple electronic devices at the same time, but different electronic devices may have different advantages and disadvantages. For example, in Figure 4, a mobile phone may be a device that users often use, which has advantages of convenient input, powerful computing capability, rich functions (including communication, multimedia, positioning, etc.), extremely high user stickiness, mass storage, and high privacy, as well as disadvantages of small screen, high weight and large volume, and heavy work load; a smart screen has the advantages of high-definition resolution, large screen, fixed position, remote control interaction, public equipment, etc, and has the disadvantages that it cannot be moved, interaction is inconvenient, and privacy is insufficient; watches have the advantages of convenience, wearability, portability, small screen, good touch, physiological data detection, and private devices, and have the disadvantage that they are not suitable for complex interactions and complex content; a tablet computer has the advantages of good touch effect and large screen size, but has the disadvantages of large volume and high weight, which makes it difficult to carry around; AR/VR has the advantages of good display effect and high privacy, but has the disadvantages of low computing power and unstable wearing comfort. Current UE policies are implemented based on UE ID (IMSI or SUPI), but a terminal (UE) may be used by different users (User ID) at different times even though the UE ID is the same, and different users have different requirements for the network due to differences in service preferences and other factors. However, the current 3GPP network cannot distinguish this functionality. In addition, a same user may use different electronic devices in different scenarios. However, the problem is how to enable free switching of the same service across different terminals, and how to achieve multi-terminal collaboration for specific users and/or specific services across different devices based on scenario requirements while meeting the requirements of supporting communication, computing, and service continuity to provide the optimal service experience.

It should be understood that the terms "system" and "network" are often used interchangeably in the present disclosure. The term "and/or" is merely a description of the relationship between associated objects, indicating that three types of relationships may exist. For example, "A and/or B" may represent the following three scenarios: A exists alone, A and B exist together, or B exists alone. Additionally, the character "/" generally indicates that the objects before and after it is in an 'or' relationship. It should be understood that the term "indicate" as mentioned in the embodiments can refer to direct indication, indirect indication, or an indication of an associative relationship. For example, "A indicates B" can mean that A directly indicates B, such as B being acquirable through A; it can also mean that A indirectly indicates B, such as A indicating C, and B being acquirable through C; or it can mean that A and B has an associative relationship. In the description of the embodiments, the term "correspond" can indicate a direct or indirect correspondence relationship between the two, or it can indicate an associative relationship between the two, or it can be an indicating-and-being-indicated, configuring-and-being-configured, etc., relationship.

To facilitate understanding of the technical solutions of the embodiments of the present disclosure, the following describes the related technologies of the embodiments of the present disclosure. The following related technologies may be combined with the technical solutions of the embodiments of the present disclosure as optional solutions, and all of them shall fall within the scope of protection of the embodiments of the present disclosure.

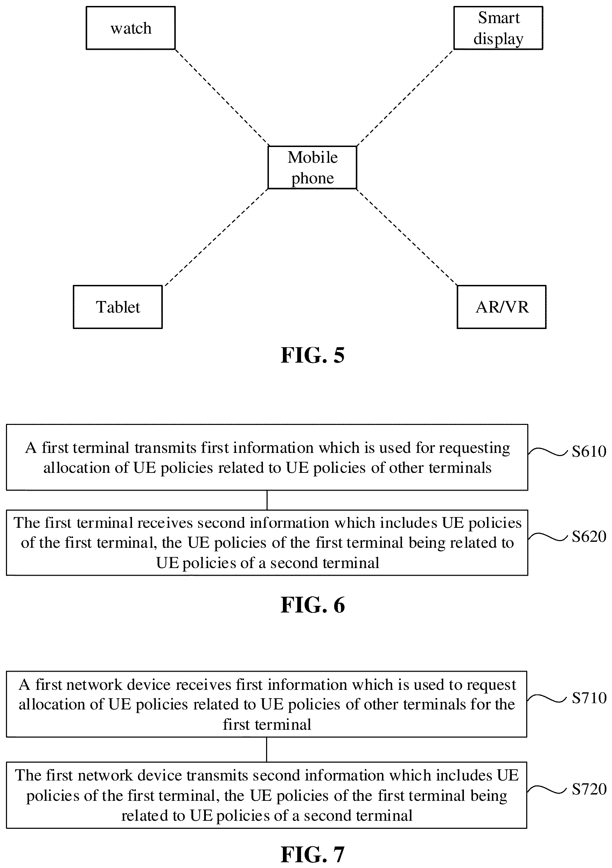

FIG. 6 is a schematic flowchart of a communication method according to an embodiment of the present disclosure. The method includes at least part of the following contents.

In operation S610: a first terminal transmits first information which is configured to request allocation of UE policies related to UE policies of other terminals.

In operation S620: the first terminal receives second information which includes UE policies of a first terminal, the UE policies of the first terminal being related to UE policies of a second terminal.

FIG. 7 is a schematic flow chart of a communication method according to another embodiment of the present disclosure. The method includes at least part of the following contents.

In operation S710: a first network device receives first information which is used to request allocation of UE policies related to UE policies of other terminals for the first terminal;
In operation S720: the first network device transmits second information which includes UE policies of a first terminal, the UE policies of the first terminal being related to UE policies of a second terminal.

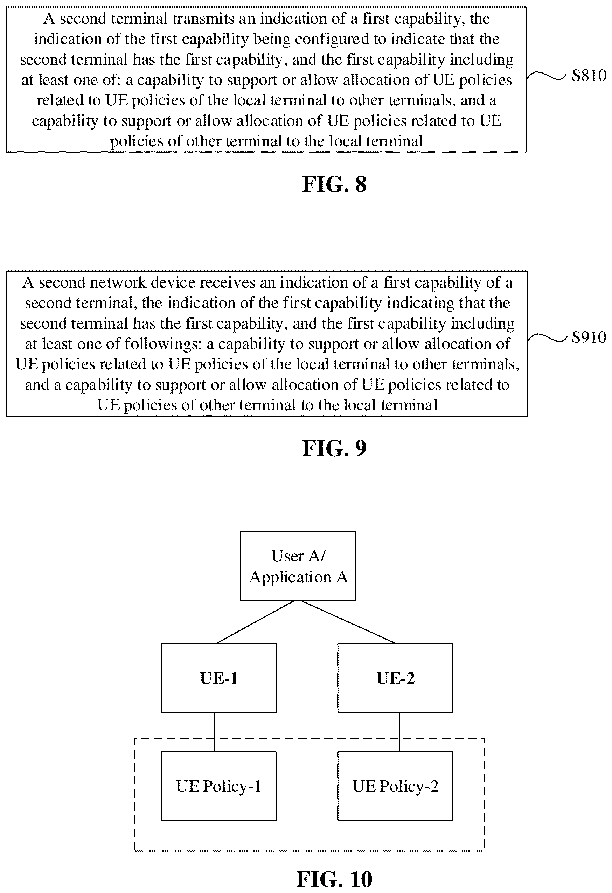

FIG. 8 is a schematic flowchart of a communication method according to an embodiment of the present disclosure. The method includes at least part of the following contents.

In operation S810: a second terminal transmits an indication of a first capability, the indication of the first capability being configured to indicate that the second terminal has the first capability, and the first capability including at least one of: a capability to support or allow allocation of UE policies related to UE policies of the local terminal to other terminals, and a capability to support or allow allocation of UE policies related to UE policies of other terminal to the local terminal. Here, the local terminal may be the second terminal.

FIG. 9 is a schematic flow chart of a communication method according to another embodiment of the present disclosure. The method includes at least part of the following contents.

In operation S910: a second network device receives an indication of a first capability of a second terminal, the indication of the first capability indicating that the second terminal has the first capability, and the first capability including at least one of followings: a capability to support or allow allocation of UE policies related to UE policies of the local terminal to other terminals, and a capability to support or allow allocation of UE policies related to UE policies of other terminal to the local terminal. Here, the local terminal may be the second terminal.

Here, the first network device may be any device serving the first terminal. In an embodiment, the first network device may be a first access network device serving the first terminal. In an embodiment, the first network device may be a first core network device serving the first terminal, e.g., the first network device may be a first Policy Control Function (PCF). It should be understood that the first network device is not limited to the core network elements listed above. Not all possible elements of the first network device are enumerated here.

The second network device may be any device serving the second terminal. In an embodiment, the second network device may be a second access network device serving the second terminal. In an embodiment, the second network device may be a second core network device serving the second terminal, for example, the second network device may be a second PCF. It should be understood that the above is merely an exemplary explanation, and in actual processing, the second network device is not limited to the network elements of the core network listed above, and all possible network elements of the second network device are not enumerated here.

The first terminal and the second terminal may be 3GPP terminals, that is, terminals that can access a 3GPP network to perform data transmission and reception, and the present embodiment does not make enumerated listing and limitation on various possible types of the first terminal and the second terminal.

Other terminals mentioned in the embodiments of the present disclosure are relative concepts, that is, other terminals are relative to the first terminal or relative to the second terminal. When describing the first terminal, other terminal refer to other terminals different from the first terminal; the number of other terminals different from the first terminal may be one or more, and the present embodiment is not limited thereto; and other terminals different from the first terminal may include the second terminal. When describing the second terminal, other terminal refer to other terminals different from the second terminal; the number of other terminals different from the second terminal may be one or more, the present embodiment is not limited thereto; and other terminals different from the second terminal may include the first terminal. Hereinafter, the definition of other terminals will not be repeated.

In some embodiments, the network devices serving the first terminal and serving the second terminal are the same, i.e., the first network device and the second network device may be the same, such embodiments may not distinguish between the first network device and the second network device, for example, the first network device may serve the first terminal and the second terminal. In some embodiments, the network devices serving the first terminal and the second terminal are different, that is, the first network device and the second network device are different.

In some possible embodiments, the network side (for example, a first network device serving the first terminal and the second terminal, or a second network device serving the second terminal) has allocated UE policies corresponding to the second terminal, and the present embodiment describes the related processing of the first terminal in this state.

Transmitting the first information by the first terminal may include: transmitting the first information by the first terminal to the first network device. Accordingly, the action of receiving the first information by the first network device may include: receiving the first information by the first network device from the first terminal.

Receiving the second information by the first terminal may include: receiving the second information from the first network device by the first terminal. Accordingly, the action of transmitting the second information by the first network device may include: transmitting the second information by the first network device to the first terminal.

The first information may be carried by an uplink UE Policy Container; and the second information may be carried by a downlink UE Policy Container. The uplink UE policy container may include at least one of: an uplink UE policy container in a registration request message and an uplink UE policy container in a registration update message. The downlink UE policy container is a downlink UE policy container in a UE Configuration Update (UCU) procedure.

Optionally, the operation of the first terminal transmitting the first information to the first network device may include that: the first terminal carries the first information in the uplink UE policy container in the registration request message, transmits the registration request message to a fourth network device, and the fourth network device transmits the uplink UE policy container carrying the first information to the first network device.

Optionally, the operation of the first terminal transmitting the first information to the first network device may include that: the first terminal carries the first information in the uplink UE policy container in the registration update message, transmits the registration update message to a fourth network device, and the fourth network device transmits the uplink UE policy container carrying the first information to the first network device.

The operation of receiving the first information from the first terminal by the first network device may include that: the first network device receives, through the fourth network device, the uplink UE policy container carrying the first information from the first terminal.

The operation of the first network device transmitting the second information to the first terminal may include that: the first network device carries the second information in a downlink UE policy container, and triggers the UCU procedure to transmit the downlink UE policy container to the first terminal through the fourth network device. Accordingly, the operation of the first terminal receiving the second information from the first network device may include that: the first terminal receives, through the fourth network device, the downlink UE policy container carrying the second information from the first network device in the UCU procedure. Here, the UCU procedure is a non-registration process.

The fourth network device also serves the first terminal, the fourth network device is different from the first network device, for example, the fourth network device may be an Access and Mobility Management Function (AMF) serving the first terminal.

In some possible embodiments, after the first network device receives the first information, the method may further include that: the first network device acquires UE policies related to the second terminal; and the first network device generates UE policies of the first terminal based on the UE policies related to the second terminal.

The UE policies related to the second terminal may include UE policies of the second terminal that can be allocated to other terminals than the second terminal. Optionally, the UE policies related to the second terminal may include UE policies that can be allocated to other terminals than the second terminal among the UE policies corresponding to the second terminal. Optionally, the UE policies related to the second terminal may include a UE policy used by the second terminal and available for allocation to other terminals than the second terminal among the UE policies corresponding to the second terminal.

Other terminal than the second terminal may refer to other terminals different from the second terminal and having a binding relationship with the second terminal. The number of other terminals than the second terminal may be one or more, and the present embodiment is not limited thereto. The first terminal may be included among the other terminals than the second terminal.

The UE policies corresponding to the second terminal may refer to all UE policies corresponding to the second terminal. It should be noted that the UE policies corresponding to the second terminal may include other UE policies of the second terminal in addition to the UE policies that can be allocated to other terminals than the second terminal (that is, a UE policies related to the second terminal), and said other UE policies of the second terminal refer to UE policies that can only be used by the second terminal, or said other UE policies of the second terminal refer to UE policies that cannot be allocated to other terminals than the second terminal.

The UE policies of the first terminal may include other UE policies of the first terminal in addition to a first UE-policy part of the UE policies related to the second terminal and/or a second UE-policy part of the UE policies related to the second terminal. Said other UE policies of the first terminal are different from and/or independent of any UE policies of the second terminal.

The types of UE policies that can be allocated to other terminals than the second terminal may include at least one of followings: one or more specified policies that can be allocated to other terminals than the second terminal, one or more specified rules that can be allocated to other terminals than the second terminal, and one or more specified parameters that can be allocated to other terminals than the second terminal.

The one or more specified policies may be predefined or negotiated. Specifically, UE policies may include a plurality of policies. The one or more specified policies may be one or more specified policies among all policies included in the UE policies. In a possible example, the one or more specified policies may include at least one of: a UE Route Selection Policy (URSP), a vehicle to everything (V2X) policy, an Access Traffic Steering, Switching, Splitting (ATSSS) policy, an Access Network Discovery & Selection Policy (ANDSP), a WLAN Selection Policy (WLANSP), and a Proximity based Service Policy (ProSe Policy).

The one or more specified rules may be predefined or negotiated. Specifically, the one or more specified rules may include one or more specified rules under at least one specified policy among the one or more specified policies. For example, the foregoing one or more specified policies include a URSP, and the one or more specified rules may be Rule-1 under the URSP. For example, the foregoing one or more specified policies include a URSP and an ANDSP, and the one or more specified rules may be Rule-1 under the URSP.

The one or more specified parameters may be predefined or negotiated. The one or more specified parameters may include one or more specified parameters in at least one specified rule under at least one specified policy among the one or more specified policies. For example, the foregoing one or more specified policies include a URSP and an ANDSP, the one or more specified rules may be Rule-1 and Rule-2 under the URSP, and the one or more specified parameters may be parameter a1 and parameter a2 under Rule-1 under the URSP.

In some possible embodiments, the UE policies related to the second terminal may be classified into UE policies in different dimensions. For example, the UE policies related to the second terminal may include at least one of: terminal-dimensional UE policies, service-dimensional UE policies, user-dimensional UE policies, and the like.

Specifically, the UE policies related to the second terminal include at least one of followings: at least part of UE policies corresponding to the second terminal; at least part of UE policies corresponding to a first service run by the second terminal; and at least part of UE policies corresponding to a first user using the second terminal.

In some possible embodiments, the operation of acquiring the UE policies related to the second terminal by the first network device may include: acquiring the UE policies related to the second terminal by the first network device locally; or, acquiring the UE policies related to the second terminal by the first network device from a second network device which serves the second terminal; or, acquiring the UE policies related to the second terminal by the first network device from a third network device which includes at least one of a Unified Data Management function (UDM) and a Unified Data Repository function (UDR).

In some embodiments, the first information may include a first identifier. The first identifier may include at least one of the following: an identifier of the second terminal, an identifier of the first service, and an identifier of the first user.

The identifier of the second terminal may include, but is not limited to, at least one of the following: a Subscription Permanent Identifier (SUPI) of the second terminal, a Subscription Concealed Identifier (SUCI) of the second terminal, a Permanent Equipment Identifier (PEI) of the second terminal, a 5G Globally Unique Temporary Identifier of the second terminal, an Internal-Group Identifier (IGI) of the second terminal, a Generic Public Subscription Identifier (GPSI) of the second terminal, and the like. The SUPI is the world's unique 5G user permanent identifier, which should be allocated to each user in the 5G system and configured in UDM/UDR. The SUPI is only used internally in 3GPP systems. The SUPI may contain: an International Mobile Subscriber Identity (IMSI), or an identifier for a specific network, which may be used for a private network. The SUCI is a privacy-preserving identifier containing the hidden SUPI. The format supported by the PEI parameter is International Mobile Station Equipment Identity (IMEI).

The identifier of the first service may include at least one of the following: a name of the first service, an ID of the first service, a serial number of the first service, and the like. It should be understood that the first service may be replaced with a first application, and the identifier of the first service may also be replaced with an identifier of the first application. For example, the identifier of the first application may include a name of the first application, an ID of the first application, a serial number of the first application, and the like. In the following embodiment, for the sake of simplicity, only the first service is described as an example, and the related description of the first service in the following embodiments may be replaced with that of the first application, and no repeated description will be given.

The identifier of the first user may include at least one of: an ID of the first user and biometric information of the first user. The biometric information may include at least one of: fingerprints, facial features, voice features, and the like. The biometric information may refer to at least one of: specific feature information of a fingerprint, specific feature information of a facial feature, and specific feature information of a voice feature. Or, the biometric information may refer to at least one of: a fingerprint ID, a facial feature ID, a voice feature ID, and the like.

**In** some embodiments, the first identifier may include only the identifier of the second terminal. The UE policies related to the second terminal may include at least part of UE policies corresponding to the second terminal. The at least part of UE policies corresponding to the second terminal may include UE policies that can be allocated to other terminals than the second terminal among the UE policies corresponding to the second terminal.

**In** an example, the action of the first network device locally acquiring the UE policies related to the second terminal may include: when the first network device determines based on the identifier of the second terminal that the UE policies corresponding to the second terminal are locally stored, acquiring UE policies that can be allocated to other terminals than the second terminal from the UE policies corresponding to the second terminal, and using the UE policies that can be allocated to other terminals than the second terminal among the UE policies corresponding to the second terminal as the UE policies related to the second terminal. In such an example, the first network device may serve the first terminal and the second terminal at the same time.

**In** an example, the action of acquiring the UE policies related to the second terminal by the first network device from the second network device may include: when the first network device determines based on the identifier of the second terminal that the second network device stores the UE policies corresponding to the second terminal, acquiring, from the second network device, UE policies that can be allocated to other terminals than the second terminal among the UE policies corresponding to the second terminal; and determining the UE policies that can be allocated to other terminals than the second terminal among the UE policies corresponding to the second terminal as the UE policies related to the second terminal.

Here, the second network device may serve the second terminal. The embodiments do not limit the manner of the first network device determining based on the identifier of the second terminal that the second network device stores the UE policies corresponding to the second terminal.

The action of the first network device acquiring, from the second network device, the UE policies that can be allocated to other terminals than the second terminal among the UE policies corresponding to the second terminal may include: obtaining the UE policies that can be allocated to other terminals than the second terminal from among the UE policies corresponding to the second terminal stored by the second network device; or, acquiring the UE policies corresponding to the second terminal from the second network device, and extracting the UE policies that can be allocated to other terminals than the second terminal from the UE policies corresponding to the second terminal.

In an example, the action of acquiring the UE policies related to the second terminal by the first network device from the third network device may include that: when the first network device determines based on the identifier of the second terminal that the UE policies corresponding to the second terminal are not locally stored, the first network device acquires, from the third network device, UE policies that can be allocated to other terminals than the second terminal among the UE policies corresponding to the second terminal, and determines the UE policies that can be allocated to other terminals than the second terminal among the UE policies corresponding to the second terminal as the UE policies related to the second terminal. Here, the third network device may be used to store all UE policies of a plurality of terminals. The embodiments do not limit the manner in which the third network device acquires and stores all UE policies of each terminal.

The action of the first network device acquiring, from the third network device, UE policies that can be allocated to other terminals than the second terminal among the UE policies corresponding to the second terminal may include that: the first network device obtains the UE policies that can be allocated to other terminals than the second terminal from the UE policies corresponding to the second terminal stored by the third network device; or, the first network device acquires the UE policies corresponding to the second terminal from the third network device, and extracs the UE policies that can be allocated to other terminals than the second terminal from the UE policies corresponding to the second terminal.

In some embodiments, the first identifier may include only the identifier of the first service. The UE policies related to the second terminal may include at least part of UE policies corresponding to the first service run by the second terminal. Optionally, at least part of the UE policies corresponding to the first service run by the second terminal may include UE policies that correspond to the first service run by the second terminal and can be allocated to other terminals than the second terminal.

In an example, the action of the first network device locally acquiring the UE policies related to the second terminal may include: when the first network device determines based on the identifier of the first service that the second terminal running the first service and having a binding relationship with the first terminal exists locally, acquiring locally stored UE policies that correspond to the first service run by the second terminal and can be allocated to other terminals than the second terminal, and using the UE policies that correspond to the first service run by the second terminal and can be allocated to other terminals than the second terminal as the UE policies related to the second terminal.

The process of the first network device determining based on the identifier of the first service whether or not the second terminal running the first service and having a binding relationship with the first terminal locally exists may include that: determining based on the identifier of the first service whether there is one or more other terminals running the first service and having a binding relationship with the first terminal are locally present, and if there is such terminal, determining one of the one or more other terminals running the first service and having a binding relationship with the first terminal as the second terminal. Here, the one or more other terminals having a binding relationship with the first terminal may be stored in the first network device in advance, and the present embodiment does not limit the manner in which the first network device acquires or obtains the binding relationship between the first terminal and the one or more other terminals. The binding relationship may alternatively be described as an association relationship, a correlation, or the like, and the present embodiment does not limit all possible descriptions of the binding relationship. It should be noted that the one or more other terminals refer to other terminals different from the first terminal.

One of the one or a plurality of other terminals that run the first service and have a binding relationship with the first terminal may be used as the second terminal in two cases. In one case, only one other terminal running the first service and having a binding relationship with the first terminal exists, and such other terminal is directly used as the second terminal. In another case, there are a plurality of other terminals running the first service and having a binding relationship with the first terminal, and in this case, another terminal satisfying a first preset condition may be selected as the second terminal from the plurality of other terminals. The first preset condition may include at least one of the following: a UE policy corresponding to a specified terminal, and the first service being recently or newly generated. The specified terminal may be pre-configured or default, for example, the specified terminal may be a smartphone, or the specified terminal may be a notebook computer, etc. Not all possible types of specified terminals are enumerated here.

In an example, the action of acquiring the UE policies related to the second terminal by the first network device from the second network device may include: acquiring UE policies that correspond to the first service run by the second terminal and can be allocated to other terminals than the second terminal from the second network device based on the identifier of the first service, and using the UE policies that correspond to the first service run by the second terminal and can be allocated to other terminals than the second terminal as the UE policies related to the second terminal.

Here, the second network device may serve the second terminal. The manner in which the first network device determines the second network device may include that: the first network device determines based on the identifier of the first service whether or not one or more other terminals running the first service and having a binding relationship with the first terminal exist locally, and if such terminal exists locally, the first network device determines one of the one or more other terminals running the first service and having a binding relationship with the first terminal as the second terminal, and determines a network device corresponding to the second terminal as the second network device. Here, the action of the first network device using one of the one or more other terminals running the first service and having a binding relationship with the first terminal as the second terminal is the same as that of the foregoing embodiment, and will not be repeatedly described.

The action of acquiring UE policies that correspond to the first service run by the second terminal and can be allocated to other terminals than the second terminal from the second network device by the first network device may include: acquiring the UE policies corresponding to the second terminal from the second network device, and extracting the UE policies that correspond to the first service run by the second terminal and can be allocated to other terminals than the second terminal from the UE policies corresponding to the second terminal; or, extracting, from the UE policies corresponding to the second terminal stored by the second network device, the UE policies that correspond to the first service run by the second terminal and can be allocated to other terminals than the second terminal.

In an example, the action of acquiring the UE policies related to the second terminal by the first network device from the third network device may include: acquiring UE policies that correspond to the first service run by the second terminal and can be allocated to other terminals than the second terminal from the third network device based on the identifier of the first service, and using the UE policies that correspond to the first service run by the second terminal and can be allocated to other terminals than the second terminal as the UE policies related to the second terminal.

The action of acquiring UE policies that correspond to the first service run by the second terminal and can be allocated to other terminals than the second terminal from the third network device by the first network device may include: acquiring the UE policies corresponding to the second terminal from the third network device, and extracting the UE policies that correspond to the first service run by the second terminal and can be allocated to other terminals than the second terminal from the UE policies corresponding to the second terminal; or, extracting, from the UE policies corresponding to the second terminal stored by the third network device, UE policies that correspond to the first service run by the second terminal and can be allocated to other terminals than the second terminal.

Here, since the third network device can be used to store the UE policies of different terminals generated by each PCF, when the first network device determines that the UE policies of the second terminal are not locally stored, the UE policies related to the second terminal may be directly acquired from the third network device.

In an embodiment, the first identifier may include only the identifier of the first user. The UE policies related to the second terminal may include at least part of UE policies corresponding to the first user using the second terminal. Optionally, using at least part of UE policies corresponding to the first user of the second terminal may include: using UE policies that correspond to the first user of the second terminal and can be allocated to other terminals than the second terminal.

In an example, the action of the first network device locally acquiring the UE policies related to the second terminal may include: when the first network device determines based on the identifier of the first user that the second terminal used by the first user and having a binding relationship with the first terminal exists locally, acquiring UE policies that correspond to the first user using the second terminal and can be allocated to other terminals than the second terminal from among the UE policies corresponding to the second terminal stored locally, and using the UE policies that correspond to the first user using the second terminal and can be allocated to other terminals than the second terminal as the UE policies related to the second terminal.

The action of the first network device determining based on the identifier of the first user whether or not the second terminal used by the first user and having a binding relationship with the first terminal exists locally may include: determining based on the identifier of the first user whether or not one or more other terminals used by the first user and having a binding relationship with the first terminal exists locally, and if such terminal exists, determining one of the one or more other terminals used by the first user and having a binding relationship with the first terminal as the second terminal. Here, the description of one or more other terminals having a binding relationship with the first terminal is the same as that of the above-described embodiment, and the description thereof is omitted.

One of the one or more other terminals used by the first user and having a binding relationship with the first terminal may be used as the second terminal in two cases. In one case, only one other terminal used by the first user and having a binding relationship with the first terminal exists, and such other terminal may be directly used as the second terminal. In another case, there are a plurality of other terminals used by the first user and having a binding relationship with the first terminal, and in this case, another terminal satisfying a second preset condition may be selected as the second terminal from the plurality of other terminals. The second preset condition may include at least one of the following: a UE policy corresponding to a specified terminal and the first user being recently or newly generated. The description of the specified terminal is the same as that of the above-described embodiment, and the description thereof will not be repeated.

In an example, the action of the first network device acquiring the UE policies related to the second terminal from the second network device may include: acquiring UE policies that correspond to the first user using the second terminal and can be allocated to other terminals than the second terminal based on the identifier of the first user from the second network device, and using the UE policies that correspond to the first user using the second terminal and can be allocated to other terminals than the second terminal as the UE policies related to the second terminal,.

Here, the manner of the first network device determining the second network device may include: determining based on the identifier of the first user whether one or more other terminals used by the first user and having a binding relationship with the first terminal exist locally; if no such terminal exists, sequentially determining whether one or more other terminals used by the first user and having a binding relationship with the first terminal exist in each candidate network device; and if existing, determining one or more other terminals used by the first user and having a binding relationship with the first terminal as the second terminal, and determining a network device corresponding to the second terminal as the second network device. Here, the manner in which the first network device uses one of the one or more other terminals running the first service and having a binding relationship with the first terminal as the second terminal is the same as that in the foregoing embodiment, and the description will not be repeated.

The action of acquiringUE policies that correspond to the first user using the second terminal and can be allocated to other terminals than the second terminal from the second network device by the first network device may include: acquiring UE policies corresponding to the second terminal from the second network device, and extracting UE policies that correspond to the first user using the second terminal and can be allocated to other terminals than the second terminal from the UE policies corresponding to the second terminal; or, extracting, from the UE policies corresponding to the second terminal stored by the second network device, UE policies that correspond to the first user using the second terminal and can be allocated to other terminals than the second terminal.

In an example, the action of the first network device acquiring the UE policies related to the second terminal from the third network device may include: acquiring, from the third network device, UE policies that correspond to the first user using the second terminal and can be allocated to other terminals than the second terminal based on the identifier of the first user, and using the UE policies that correspond to the first user using the second terminal and can be allocated to other terminals than the second terminal as the UE policies related to the second terminal.

The action of acquiring UE policies that correspond to the first user using the second terminal and can be allocated to other terminals than the second terminal from the third network device by the first network device may include: acquiring UE policies corresponding to the second terminal from the third network device, and extracting UE policies that correspond to the first user using the second terminal and can be allocated to other terminals than the second terminal from among the UE policies corresponding to the second terminal; or, extracting, from the UE policies corresponding to the second terminal stored by the third network device, UE policies that correspond to the first user using the second terminal and can be allocated to other terminals than the second terminal.

In some embodiments, the first identifier includes the identifier of the second terminal, and the first identifier may further include at least one of an identifier of the first service and an identifier of the first user.

Optionally, the first identifier may include an identifier of the second terminal and an identifier of the first service, that is, the first identifier is used to indicate the first service operated by the second terminal. Accordingly, the UE policies related to the second terminal include UE policies that correspond to the first service run by the second terminal and can be allocated to other terminals than the second terminal.

Optionally, the first identifier may include an identifier of the second terminal and an identifier of the first user, that is, the first identifier is used to indicate the first user using the second terminal; accordingly, the UE policies related to the second terminal include UE policies that correspond to the first user using the second terminal and can be allocated to other terminals than the second terminal.

Optionally, the first identifier may include an identifier of the second terminal, an identifier of the first service, and an identifier of the first user, that is, the first identifier is used to indicate the first user using the second terminal and the first service of the first user running on the second terminal. Accordingly, the UE policies related to the second terminal include UE policies that can be allocated to other terminals than the second terminal and correspond to the first service run by the first user using the second terminal.

The above has provided the contents that may be included in the UE policies related to the second terminal in different combinations of the first identifiers, and in the examples below, the contents of the UE policies related to the second terminal in different combinations of the first identifiers will not be repeated.

In an example, the action of the first network device locally acquiring the UE policies related to the second terminal may include that: when the first network device determines that the UE policies corresponding to the second terminal are locally stored based on the identifier of the second terminal included in the first identifier, the first network device acquires the UE policies related to the second terminal locally stored based on at least one of the identifier of the first service and the identifier of the first user included in the first identifier.

In an example, the action of acquiring the UE policies related to the second terminal by the first network device from the second network device may include that: when the first network device determines that the second network device stores the UE policies corresponding to the second terminal based on the identifier of the second terminal included in the first identifier, the first network device acquires the UE policies related to the second terminal from the second network device based on at least one of the identifier of the first service and the identifier of the first user included in the first identifier.

The embodiments do not set limits to how the first network device determines that the second network device stores the UE policies corresponding to the second terminal based on the identifier of the second terminal.

The action of acquiring the UE policies related to the second terminal from the second network device by the first network device based on at least one of the identifier of the first service and the identifier of the first user included in the first identifier may include one of the following steps: after the first network device acquires the UE policies corresponding to the second terminal from the second network device, the first network device selects the UE policies related to the second terminal from the UE policies corresponding to the second terminal based on at least one of the identifier of the first service and the identifier of the first user; alternatively, the first network device extracts the UE policies related to the second terminal from the UE policies corresponding to the second terminal directly acquired from the second network device based on at least one of the identifier of the first service and the identifier of the first user.

In an example, the action of acquiring the UE policies related to the second terminal by the first network device from the third network device may include that: when the first network device determines based on the identifier of the second terminal included in the first identifier that the UE policies corresponding to the second terminal are not locally stored, the first network device acquires the UE policies related to the second terminal from the third network device based on at least one of the identifier of the first service and the identifier of the first user.

The action of acquiring the UE policies related to the second terminal by the first network device from the third network device based on at least one of the identifier of the first service and the identifier of the first user may include that: after the first network device acquires the UE policies corresponding to the second terminal from the third network device, the first network device selects the UE policies related to the second terminal from the UE policies corresponding to the second terminal based on at least one of the identifier of the first service and the identifier of the first user; alternatively, the first network device directly acquires the UE policies related to the second terminal from the third network device based on at least one of the identifier of the first service and the identifier of the first user.

In some possible embodiments, the first identifier is not included in the first information.

In present embodiments, the UE policies related to the second terminal may include UE policies that can be allocated to other terminals than the second terminal among the UE policies corresponding to the second terminal.

Note that if at least one of the identifier of the first service and the identifier of the first user is configured in advance or defaulted by the first network device, the UE policies related to the second terminal may include at least one of followings: UE policies that correspond to the first service run by the second terminal and can be allocated to other terminals than the second terminal; and UE policies that correspond to the first user using the second terminal and can be allocated to other terminals than the second terminal. For example, if the first service may be a specified service configured in advance in the first network device, the first network device may default to be required to obtain UE policies that correspond to the first service run by the second terminal and can be allocated to other terminals than the second terminal as the UE policies related to the second terminal. Not all possible situations are described here.

Next, for convenience of illustration, the description will take, as an example, the case where the UE policies related to the second terminal include UE policies that can be allocated to other terminals than the second terminal among the UE policies corresponding to the second terminal.

In an example, the action of acquiring the UE policies related to the second terminal locally by the first network device may include that: when the first network device determines that the second terminal having a binding relationship with the first terminal exists locally, the first network device acquires the locally stored UE policies that correspond to the second terminal and can be allocated to other terminals than the second terminal, and uses them as the UE policies related to the second terminal.

The action of determining by the first network device whether or not the second terminal having a binding relationship with the first terminal exists locally may include: determining whether or not one or more other terminals having a binding relationship with the first terminal exists locally, and if existing, determining one of the one or more other terminals having a binding relationship with the first terminal as the second terminal.

Here, one of the one or more other terminals having a binding relationship with the first terminal may be regarded as the second terminal in two cases. In one case, only one other terminal having a binding relationship with the first terminal is regarded as the second terminal. In another case, if there are a plurality of other terminals that have a binding relationship with the first terminal, another terminal that satisfies a third preset condition among the plurality of other terminals may be regarded as the second terminal, and the third preset condition may include at least one of the following: a UE policy being recently or newly generated for a specified terminal. The description of the specified terminal is the same as that of the above-described embodiment, and the description thereof will not be repeated.

In an example, the action of acquiring the UE policies related to the second terminal by the first network device from the second network device may include that: when the first network device determines that there is the second terminal that has a binding relationship with the first terminal in the second network device, the first network device acquires, from the second network device, UE policies that can be allocated to other terminals than the second terminal among the UE policies corresponding to the second terminal, and determines the UE policies that can be allocated to other terminals than the second terminal as the UE policies related to the second terminal.

In this example, the manner in which the first network device determines that the second terminal that has a binding relationship with the first terminal exists in the second network device may include that: the first network device determines whether one or more other terminals that have a binding relationship with the first terminal exists locally; if not existing, the first network device sequentially determines whether one or more other terminals that have a binding relationship with the first terminal exist in each candidate network device; and if existing, the first network device determines one of the one or more other terminals that have a binding relationship with the first terminal as the second terminal, and determines the network device corresponding to the second terminal as the second network device. Here, the manner of using one of one or a plurality of other terminals having a binding relationship with the first terminal as the second terminal is the same as in the above-described embodiment, and the description thereof will not be repeated.

In an example, the action of acquiring the UE policies related to the second terminal by the first network device from the third network device may include: acquiring, from the third network device, UE policies corresponding to the second terminal that has a binding relationship with the first terminal, and using UE policies that can be allocated to other terminals than the second terminal among the UE policies corresponding to the second terminal as the UE policies related to the second terminal. Here, the manner of determining the second terminal that has a binding relationship with the first terminal may be that: when only one other terminal having a binding relationship with the first terminal exists in the third network device, the other terminal may be directly used as the second terminal; alternatively, if a plurality of other terminals that have a binding relationship with the first terminal exist in the third network device, another terminal satisfying the third preset condition among the plurality of other terminals may be used as the second terminal. The description of the third preset condition is the same as that of the foregoing embodiment, and will not be repeatedly described.

In some possible embodiments, the UE policies of the first terminal may include at least one of followings: a first UE-policy part of the UE policies related to the second terminal; and a second UE-policy part of the UE policies related to the second terminal.

In an embodiment, the UE policies of the first terminal may include a first UE-policy part of the UE policies related to the second terminal. The first UE-policy part may be all or part of the parameters of the UE policies related to the second terminal.

The action of the first network device generating the UE policies of the first terminal based on the first UE-policy part in the UE policies related to the second terminal may include that the first network device may add the first UE-policy part in the UE policies related to the second terminal to the UE policies of the first terminal.

In some possible cases, the action of the first network device may further include that: the first network device generates other UE policies of the first terminal, and adds the other UE policies of the first terminal to the UE policies of the first terminal. The other UE policies of the first terminal may be generated based on the local related configuration of the first network device and/or relevant parameters or related configurations of the first terminal, and said other UE policies of the first terminal are different from and/or unrelated to any UE policy of the second terminal. The specific method of generating other UE policies of the first terminal is not limited in the embodiments.

In an embodiment, the UE policies of the first terminal may include UE policies related to the second UE-policy part of the UE policies related to the second terminal.

The second UE-policy part may be all or part of the UE policies related to the second terminal. The UE policies related to the second UE-policy part of the UE policies related to the second terminal may be obtained after adjusting the second UE-policy part of the UE policies related to the second terminal based on a mapping relationship and/or an association relationship.

The action of the first network device generating the UE policies of the first terminal based on the UE policies related to the second terminal may include that: the first network device processes the second UE-policy part of the UE policies related to the second terminal to obtain UE policies related to the second UE-policy part of the UE policies related to the second terminal; and the first network device generates the UE policies of the first terminal based on the UE policies related to the second UE-policy part of the UE policies related to the second terminal.

The action of the first network device processing the second UE-policy part of the UE policies related to the second terminal to obtain UE policies related to the second UE-policy part of the UE policies related to the second terminal may include that: the first network device adjusts the second UE-policy part of the UE policies related to the second terminal according to the relevant information of the first terminal and a preset mapping relationship table (or association relationship table) to obtain UE policies that are applicable to the first terminal and are related to the second UE-policy part of the UE policies related to the second terminal.

The relevant information of the first terminal is different from the relevant information of the second terminal. For example, the relevant information of the first terminal may include at least one of followings: a bit rate supported by the first terminal, a resolution supported by the first terminal, a computing capability supported by the first terminal, a communication capability of the first terminal, a screen clarity of the first terminal, and the like. The relevant information of the first terminal may be acquired in advance by the first network device, and the manner in which the first network device acquires the relevant information of the first terminal is not limited here.

The mapping relationship table and/or the association relationship table may be pre-configured or negotiated, to which no limit is set by the embodiments. In actual processing, as long as the relevant information of the first terminal is different from that of the second terminal, there may be a corresponding adjustment, and the relevant parameters of the second UE-policy part of the UE policies related to the second terminal adjusted based on the mapping relationship table and/or the association relationship table are applicable to the first terminal, which is within the scope of protection of the present embodiments, and is not exhaustive here.

The action of the first network device generating the UE policies of the first terminal based on the UE policies related to the second UE-policy part of the UE policies related to the second terminal may include that: the first network device may add the UE policies related to the second UE-policy part of the UE policies related to the second terminal to the UE policies of the first terminal. In some possible cases, the action of the first network device may further include that: the first network device generates other UE policies of the first terminal, and adds the other UE policies of the first terminal to the UE policies of the first terminal. The description of other UE policies of the first terminal is the same as that of the above-described embodiment, and no limit is set in the embodiments.

In the embodiments, the first network device may obtain UE policies related to the second UE-policy part of the UE policies related to the second terminal by adjusting the UE policies related to the second UE-policy part of the UE policies related to the second terminal based on the relevant information of the first terminal and the mapping relationship table (or the association relationship table), and then generate the UE policies of the first terminal based on the UE policies related to the second UE-policy part of the UE policies related to the second terminal, so that the UE policies of the first terminal can be related to the UE policies related to the second terminal, and can be higher applicable to the first terminal.

In an embodiment, the UE policies of the first terminal may include the following two parts: a first UE-policy part of the UE policies related to the second terminal, and UE policies related to the second UE-policy UE-policy part of the UE policies related to the second terminal. In this case, the first UE-policy part is different from the second UE-policy part; and the first UE-policy part and the second UE-policy part may constitute all or part of the UE policies related to the second terminal.

The action of the first network device generating the UE policies of the first terminal based on the UE policies related to the second terminal may include that: the first network device directly adds the first UE-policy part of the UE policies related to the second terminal to the UE policies of the first terminal; and the first network device processes the second UE-policy part of the UE policies related to the second terminal, obtains related UE policies of the second UE-policy part of the UE policies related to the second terminal, and adds the related UE policies of the second UE-policy part of the UE policies related to the second terminal to the UE policies of the first terminal. The description of processing of the first UE-policy part and the second UE-policy part of the UE policies related to the second terminal by the first network device is the same as that of the above-described embodiment, and the description thereof will not be repeated.

After the above processing, the UE policies of the first terminal may include the first UE-policy part of UE policies related to the second terminal and/or the second UE-policy part of the UE policies related to the second terminal. Referring to FIG. 10, for example, FIG. 10 illustrates UE-1 and UE-2 which serve the same user A or the same application A. Assuming that UE-1 is the first terminal and UE-2 is the second terminal, the first network device has allocated UE Policy-2 corresponding to the user A (or application A) to the UE-2. When it is required to migrate the user A from the UE-2 to the UE-1, the UE policy-1 corresponding to the user A may be allocated based on the UE policy-2, and the UE policy-1 is allocated to the UE-1, the UE policy-1 and the UE policy-2 may be partially same and/or partially different and/or partially relevant; or, the UE policy-1 correponding to the user A (or application A) and allocated for the UE-1 may be exactly the same as the UE policy-2. For example, the UE-1 and the UE-2 serve the same user A, the second UE-policy part of the UE policy-2 allocated to the UE-2 includes the rule-1 under the URSP, and the UE policy-1 allocated to the UE-1 includes the rule-2 under the URSP, and the association relationship therebetween may be generated based on pre-configuration or negotiation. For another example, UE-1 and UE-2 serve the same application A, and the second UE-policy part of the UE policy-2 allocated to UE-2 includes the RSD parameter-1 of TD-1 in the rule-1 under the URSP, and the UE policy-1 allocated to UE-1 includes the RSD parameter-2 of TD-1 in the rule-1 under the URSP. The UE policy-1 of the UE-1 further includes the first UE-policy part of the UE policy-2 of the UE-2, for example, the UE-1 and the UE-2 use TD-2 in the rule-1 under the same URSP. There may be many reasons why UE-1 and UE-2 have different UE policies, such as different computing capabilities, different communication capabilities, different display clarity, etc. of UE-1 and UE-2, which may lead to changes in their UE policies.

Note that UE-1 and UE-2 in FIG. 10 are only any two UEs serving the same user A or the same application A, and in actual processing, there may be more UEs serving the same user A or the same application A, for example, in addition to UE-1 and UE-2, there may also be UE-3, UE-4, etc. serving the same user A or the same application A, and similar processing between UE-1 and UE-2 may be performed between any two UEs serving the same user A or the same application A. FIG. 10 does not illustrate more UEs merely for simplicity.

In an embodiment, the second information may further include selection indication information which indicates at least one of a UE policy used by the second terminal and a UE policy preferentially selected by the first terminal.

In the embodiments, the process of generating the UE policies of the first terminal by the first network device is the same as that of the foregoing embodiment, and the description thereof will not be repeated.

Different from the foregoing embodiments, the method may further include: acquiring a policy update indication of the second terminal by the first network device. The policy update indication is used to determine the UE policy used by the second terminal from the UE policies of the second terminal. Exemplarily, the policy update indication may include at least one of: contents of the UE policy used by the second terminal, a name of the UE policy used by the second terminal, an identifier of the UE policy used by the second terminal, a serial number of the UE policy used by the second terminal, related description information of the UE policy used by the second terminal, and the like.

The UE policy used by the second terminal may include at least one of the following: a policy used by the second terminal among the UE policies corresponding to the second terminal; a rule used by the second terminal in the UE policies corresponding to the second terminal; and a parameter used by the second terminal in the UE policies corresponding to the second terminal. The policy used by the second terminal may include at least one of: URSP, V2X policy, ATSSS policy, ANDSP, WLANSP, and ProSe Policy.

Acquiring the policy update indication of the second terminal by the first network device may include: when the first network device serves both the first terminal and the second terminal, directly receiving the policy update indication of the second terminal; or, when the first network device serves the first terminal and the second network device serves the second terminal, acquiring the policy update indication of the second terminal from the second network device.

The first network device directly receives the policy update indication from the second terminal, which may mean that the first network device may directly receive the policy update indication from the second terminal at any time.

The first network device acquires the policy update indication of the second terminal from the second network device, which may mean that the first network device acquires the policy update indication of the second terminal from the second network device before the first network device generates the UE policies of the first terminal or before the first network device transmits the second information. Here, the action of the first network device acquiring the policy update indication of the second terminal from the second network device may include that: the first network device queries the second network device whether there is a policy update indication of the second terminal; if there is no policy update indication of the second terminal, the first network device does not obtain the policy update indication of the second terminal; and if there is, the first network device acquires the policy update indication of the second terminal from the second network device. The first network device may query the second network device whether there is a policy update indication of the second terminal at the same time when the first network device acquires the UE policies related to the second terminal from the second network device, or before or after the first network device acquires the UE policies related to the second terminal from the second network device, which all fall within the protection scope of the present embodiment as long as the query is carried out before the first network device transmits the second information.

Optionally, the action of the first network device may further include: when the UE policy used by the second terminal exists in the UE policies of the first terminal, generating selection indication information based on relevant information of the UE policies related to the UE policies used by the second terminal in the UE policies of the first terminal; and/or, when the UE policy used by the second terminal does not exist in the UE policies of the first terminal, generating no selection indication information.

In this case, the selection indication information may be used to indicate the UE policy used by the second terminal. Specifically, the selection indication information is used to indicate the UE policy used by the second terminal among the UE policies of the first terminal. The selection indication information may include at least one of: a content of the UE policy used by the second terminal in the UE policies of the first terminal, a name of the UE policy used by the second terminal in the UE policies of the first terminal, an identifier of the UE policy used by the second terminal in the UE policies of the first terminal, a serial number of the UE policy used by the second terminal in the UE policies of the first terminal, related description information of the UE policy used by the second terminal in the UE policies of the first terminal, and the like.

Optionally, the action of the first network device may further include: when a UE policy related to the UE policy used by the second terminal exists in the UE policies of the first terminal, generating selection indication information based on relevant information of the UE policies related to the UE policies used by the second terminal in the UE policies of the first terminal; and/or, when no UE policy related to the UE policy used by the second terminal exists in the UE policies of the first terminal, generating no selection indication information.

In this case, the selection indication information may be used to indicate the UE policy preferentially selected by the first terminal. Specifically, the selection indication information is used to indicate to preferentially select a UE policy related to the UE policy used by the second terminal from the UE policies of the first terminal. The selection indication information may include at least one of: a content of the UE poliy related to the UE policy used by the second terminal among the UE policies of the first terminal, a name of the UE poliy related to the UE policy used by the second terminal among the UE policies of the first terminal, an identifier of the UE poliy related to the UE policy used by the second terminal among the UE policies of the first terminal, a serial number of the UE poliy related to the UE policy used by the second terminal among the UE policies of the first terminal, and related description information of the UE poliy related to the UE policy used by the second terminal among the UE policies of the first terminal.

Optionally, the action of the first network device may further include: when the UE policy used by the second terminal exists in the UE policies of the first terminal and a UE policy related to the UE policy used by the second terminal exists in the UE policies of the first terminal, generating selection indication information on the basis of relevant information of the UE policy used by the second terminal in the UE policies of the first terminal and relevant information of the UE policies related to the UE policies used by the second terminal in the UE policies of the first terminal.

In this case, the selection indication information may be used to indicate the UE policy used by the second terminal among the UE policies of the first terminal, and to indicate to preferentially select a UE policy related to the UE policy used by the second terminal among the UE policies of the first terminal. The selection indication information may include the contents of the foregoing two examples, and will not be described repeatedly.

In the embodiments, the second information includes selection indication information, which may mean that the second information includes a plurality of information elements, wherein a first information element carries the selection indication information, and a second information element carries the UE policies of the first terminal. The first information element and the second information element are different, and both the first information element and the second information element are any information elements among the plurality of information elements of the second information.

Alternatively, the second information includes selection indication information, which may mean that the second information includes a plurality of information elements, and a first information element carries the selection indication information and the UE policies of the first terminal. The first information element is any one of the plurality of information elements of the second information.

Alternatively, the selection indication information may be a constituent content in the UE policies of the first terminal. Accordingly, the second information includes selection indication information, which may mean that the second information includes a plurality of information elements, wherein the UE policies of the first terminal is carried in a first information element, and the selection indication information is included in the UE policies of the first terminal.

In an embodiment, the UE policies related to the second terminal may include a related UE policy used by the second terminal and available for allocation to other terminals than the second terminal.

Specifically, at least part of the UE policies corresponding to the second terminal may include a UE policy used by the second terminal and available for allocation to other terminals than the second terminal among the UE policies corresponding to the second terminal. At least part of UE policies corresponding to the first service run by the second terminal may include a UE policy used by the first service run by the second terminal and available for allocation to other terminals than the second terminal. The at least part of UE policies corresponding to the first user using the second terminal may include a UE policy used by the first user of the second terminal and available for allocation to other terminals than the second terminal.

When executing the processing of the embodiments, the first network device is required to acquire a policy update indication of the second terminal before generating the UE policies of the first terminal. The relevant description of acquiring the policy update indication of the second terminal by the first network device and that of the policy update indication have been given in detail, and the description thereof will not be repeated here.

In an embodiment, after the first network device receives the first information, the method may further include that: the first network device acquires the UE policies related to the second terminal based on the policy update indication of the second terminal; and the first network device generates the UE policies of the first terminal based on the UE policies related to the second terminal.

The action of acquiring the UE policies related to the second terminal by the first network device based on the policy update indication of the second terminal may include that: the first network device locally obtains the UE policies related to the second terminal based on the policy update indication of the second terminal; or, the first network device acquires the UE policies related to the second terminal from the second network device based on the policy update indication of the second terminal, the second network device serving the second terminal.

In some embodiments, the first identifier includes only the identifier of the second terminal. In the embodiments, the UE policies related to the second terminal may include the UE policy used by the second terminal and available for allocation to other terminals than the second terminal among the UE policies corresponding to the second terminal.

In an example, the process of locally acquiring the UE policies related to the second terminal by the first network device based on the policy update indication of the second terminal may include: when the first network device determines based on the identifier of the second terminal that the UE policies corresponding to the second terminal are locally stored, acquiring the UE policy used by the second terminal and available for allocation to other terminals than the second terminal based on the policy update indication of the second terminal, and using the UE policy used by the second terminal and available for allocation to other terminals than the second terminal as the UE policies related to the second terminal. In such an example, the first network device may serve the first terminal and the second terminal at the same time.

The action of acquiring the UE policy used by the second terminal and available for allocation to other terminals than the second terminal based on the policy update indication of the second terminal may include: acquiring UE policies of the second terminal that can be allocated to other terminals than the second terminal, and extracting, based on the policy update indication of the second terminal, the UE policy used by the second terminal and allocatable to other terminals than the second terminal from the UE policies of the second terminal that can be allocated to other terminals than the second terminal.

In an example, the action of acquiring the UE policies related to the second terminal from the second network device based on the policy update indication of the second terminal may include that: when the first network device determines that the second network device stores the UE policies corresponding to the second terminal based on the identifier of the second terminal, the first network device acquires from the second network device the UE policy used by the second terminal and available for allocation to other terminals than the second terminal based on the policy update information of the second terminal, and determines the UE policy used by the second terminal and allocatable to other terminals than the second terminal as the UE policies related to the second terminal.

Here, the second network device may be serve the second terminal. The embodiments do not limit the method in which the first network device determines that the second network device stores the UE policies corresponding to the second terminal based on the identifier of the second terminal.

The action of the first network device acquiring, from the second network device, the UE policy used by the second terminal and available for allocation to other terminals than the second terminal based on the policy update information of the second terminal may include that: the first network device acquires the policy update information of the second terminal from the second network device, acquires the UE policy used by the second terminal and allocatable to other terminals than the second terminal from the UE policies corresponding to the second terminal stored by the second network device based on the policy update information of the second terminal; or, the first network device acquires the UE policies corresponding to the second terminal and the policy update information of the second terminal from the second network device, and extracts the UE policy used by the second terminal and capable of being allocated to other terminals than the second terminal from the UE policies corresponding to the second terminal based on the policy update information of the second terminal.

In some embodiments, the first identifier may include only the identifier of the first service. In the embodiments, the UE policies related to the second terminal include UE policies that can be allocated to other terminals than the second terminal and are used by the first service operated by the second terminal.

In an example, the action of the first network device locally acquiring the UE policies related to the second terminal based on the policy update indication of the second terminal may include: when the first network device determines based on the identifier of the first service that the second terminal running the first service and having a binding relationship with the first terminal exists locally, acquiring locally stored UE policies used by the first service run by the second terminal and allocatable to other terminals than the second terminal based on the policy update indication of the second terminal, and using the UE policies used by the first service run by the second terminal as the UE policies related to the second terminal.

The process for the first network device to determine whether or not the second terminal running the first service and having a binding relationship with the first terminal exists locally based on the identifier of the first service is the same as that of the above-described embodiment, and will not be repeatedly described.

In an example, the action of acquiring the UE policies related to the second terminal by the first network device from the second network device based on the policy update indication of the second terminal may include: acquiring, from the second network device, UE policies used by the first service run by the second terminal and allocatable to other terminals than the second terminal based on the identifier of the first service and the policy update indication of the second terminal, and using the UE policies used by the first service run by the second terminal as the UE policies related to the second terminal.

The action of the first network device acquiring, from the second network device, UE policies used by the first service run by the second terminal and allocatable to other terminals than the second terminal based on the identifier of the first service and the policy update indication of the second terminal may include that: the first network device acquires the UE policies corresponding to the second terminal and the policy update indication of the second terminal, and extracts UE policies used by the first service run by the second terminal and allocatable to other terminals than the second terminal based on the identifier of the first service and the policy update indication of the second terminal from the UE policies corresponding to the second terminal; or, the first network device acquires the policy update indication of the second terminal from the second network device, and extracts, from the UE policies corresponding to the second terminal stored by the second network device, UE policies used by the first service run by the second terminal and allocatable to other terminals than the second terminal based on the policy update indication of the second terminal and the identifier of the first service.

**In** an embodiment, the first identifier may include only the identifier of the first user. In the embodiments, the UE policies related to the second terminal include UE policies used by the first user of the second terminal and allocatable to other terminals than the second terminal.

**In** an example, the action of the first network device locally acquiring the UE policies related to the second terminal based on the policy update indication of the second terminal may include: when the first network device determines based on the identifier of the first user that the second terminal used by the first user and having a binding relationship with the first terminal exists locally, acquiring locally stored UE policies used by the first user of the second terminal and allocatable to other terminals than the second terminal based on the policy update indication of the second terminal, and selecting the UE policies used by the first user of the second terminal and allocatable to other terminals than the second terminal as the UE policies related to the second terminal.

The description of the first network device determining whether or not the second terminal used by the first user and having a binding relationship with the first terminal exists locally based on the identifier of the first user is the same as that of the foregoing embodiment, and will not be repeatedly described.

**In** an example, the action of acquiring the UE policies related to the second terminal by the first network device from the second network device based on the policy update indication of the second terminal may include: acquiring, from the second network device, UE policies used by the first user of the second terminal and allocatable to other terminals than the second terminal based on the identifier of the first user and the policy update indication of the second terminal, and using the UE policies used by the first user of the second terminal and allocatable to other terminals than the second terminal as the UE policies related to the second terminal.

The action of the first network device acquiring, from the second network device, UE policies used by the first user of the second terminal and allocatable to other terminals than the second terminal based on the identifier of the first user and the policy update indication of the second terminal may include that: the first network device acquires the UE policies corresponding to the second terminal and the policy update information of the second terminal, and extracts UE polices used by the first user of the second terminal and allocatable to other terminals than the second terminal from the UE policies corresponding to the second terminal based on the identifier of the first user and the policy update indication of the second terminal; or the first network device acquires the policy update indication of the second terminal from the second network device, and extracts UE policies used by the first user of the second terminal and allocatable to other terminals than the second terminal from the UE policies corresponding to the second terminal stored by the second network device based on the policy update indication of the second terminal and the identifier of the first user.

**In** some embodiments, the first identifier may include the identifier of the second terminal, and the first identifier may further include at least one of the following: the identifier of the first service and the identifier of the first user.

Optionally, the first identifier may include the identifier of the second terminal and the identifier of the first service, that is, the first identifier is used to indicate the first service operated by the second terminal. Accordingly, the UE policies related to the second terminal include the UE policy used by the second terminal and available for allocation to other terminals than the second terminal among the UE policies corresponding to the second terminal.

Optionally, the first identifier may include the identifier of the second terminal and the identifier of the first user, that is, the first identifier is used to indicate the first user using the second terminal. Accordingly, the UE policies related to the second terminal include UE policies used by the first service run by the second terminal and allocatable to other terminals than the second terminal.

Optionally, the first identifier may include the identifier of the second terminal, the identifier of the first service, and the identifier of the first user, that is, the first identifier is used to indicate the first user using the second terminal and the first service of the first user running on the second terminal. Accordingly, the UE policies related to the second terminal include UE policies used by the first user of the second terminal and allcatable to other terminals than the second terminal.

The contents that may be included in the UE policies related to the second terminal in different combinations of the first identifiers have been described in detail, and in the examples provided below, the contents of the UE policies related to the second terminal in different combinations of the first identifiers are not repeated.

**In** an example, the action of the first network device locally acquiring the UE policies related to the second terminal based on the policy update indication of the second terminal may include that: when the first network device determines that the second terminal exists locally based on the identifier of the second terminal included in the first identifier, the first network device acquires the UE policies related to the second terminal stored locally based on the policy update indication of the second terminal and at least one of the identifier of the first service and the identifier of the first user included in the first identifier.

**In** an example, the action of acquiring the UE policies related to the second terminal from the second network device based on the policy update indication of the second terminal by the first network device may include that: when the first network device determines based on the identifier of the second terminal included in the first identifier that no second terminal exists locally, the first network device acquires the UE policies related to the second terminal from the second network device based on the policy update indication of the second terminal and at least one of the identifier of the first service and the identifier of the first user included in the first identifier.

The action of the first network device acquiring the UE policies related to the second terminal from the second network device based on the policy update indication of the second terminal and at least one of the identifier of the first service and the identifier of the first user included in the first identifier may include that: the first network device acquires the UE policies corresponding to the second terminal, the policy update information of the second terminal, and at least one of the identifier of the first service and the identifier of the first user included in the first identifier of the first network device from the second network device, and selects the UE policies related to the second terminal from the UE policies corresponding to the second terminal; or, the first network device acquires the policy update indication of the second terminal from the second network device, and directly extracts the UE policies related to the second terminal from the UE policies corresponding to the second terminal stored by the second network device based on the policy update indication of the second terminal and at least one of the identifier of the first service and the identifier of the first user. There will be no repetition.

**In** some possible embodiments, after the first network device generates the UE policies of the first terminal, the first network device may locally store the UE policies of the first terminal.

**In** the embodiments, the first network device may locally store the UE policies of the first terminal, in addition, the action of the first network device may further include that: the first network device transmits second information, wherein the second information includes the UE policies of the first terminal. The description of the second information is the same as that of the above-described embodiment, and will not be repeatedly described.

That is, after the first network device generates UE policies for the first terminal, the UE policies of the first terminal may be allocated to a network element (which e.g., may include the first network device) serving the first terminal and/or the first terminal.

In some possible embodiments, the first terminal may further report information of a first capability to cause the first network device to determine that the first terminal has the first capability.

The action of the first terminal may further include that: the first terminal transmits an indication of the first capability, wherein the indication of the first capability is configured to indicate that the first terminal has the first capability, and the first capability includes at least one of: a capability to support or allow allocation of UE policies related to the UE policies of the local terminal to other terminals, and a capability to support or allow allocation of UE policies related to the UE policies of other terminals to the local terminal. Accordingly, the action of the first network device may further include that: the first network device receives the indication of the first capability, wherein the indication of the first capability is configured to indicate that the first terminal has the first capability, and the first capability includes at least one of: a capability to support or allow allocation of UE policies related to at least part of the UE policies of the local terminal to one or more other terminals, and a capability to support or allow allocation of UE policies related to at least part of the UE policies of the one or more other terminals to the local terminal.

The fact that the first terminal has the first capability may mean that the first terminal supports or allows any processing associated with the first terminal under the operations corresponding to the first capability, and also supports or allows the network side (such as the first network device) to perform processing related to the first capability.

Here, the action of the first terminal transmitting the indication of the first capability refers to transmitting the indication of the first capability by the first terminal to the first network device; accordingly, the action of the first network device receiving the indication of the first capability refers to receiving the indication of the first capability from the first terminal by the first network device.

The local terminal mentioned when describing the first capability of the first terminal refers to the first terminal; and any other terminal as involved refers to other terminals than the first terminal, and said another terminal does not specifically refer to a certain terminal or terminals, and as long as said another terminal is different from the first terminal, it falls within the protection scope of the present embodiment.

The indication of the first capability may indicate that the first terminal has the first capability through description information. Alternatively, the indication of the first capability may indicate whether the first terminal has the first capability by a value of an indication bit, for example, when the value of the indication bit is a first value, it indicates that the first terminal has the first capability, and when the value of the indication bit is a second value, it indicates that the first terminal does not have the first capability. The first value and the second value may be set according to the actual situation, for example, the first value may be 0, the second value may be 1, or the first value may be 1, and the second value may be 0, which is not exhaustive or limited here.

Optionally, the aforementioned first capability may include only the capability to support or allow allocation of UE policies related to UE policies of other terminals to the local terminal.

In this case, the first network device may determine that the first terminal can only be allocated with UE policies related to at least part of UE policies of any other terminal. Alternatively, the first network device may determine that the first terminal can not only be allocated with UE policies related to at least part of UE policies of any other terminal, but can also allocate the UE policies related to the first terminal to any other terminal than the first terminal.

The UE policy related to UE policies of other terminals includes UE policies related to at least part of UE policies of each other terminal among at least part of one or more other terminals different from the first terminal. Further, the UE policies related to at least part of UE policies of any other terminal may include: a first UE-policy part of the UE polices related to any other terminal and/or a second UE-policy part of the UE policies related to any other terminal. The description of the UE policies related to any other terminal is similar to the UE policies related to the second terminal in the foregoing embodiments. The description of the first UE-policy part and the second UE-policy part of the policy is also similar to that of the foregoing embodiments, and thus the description thereof will not be repeated here.

Optionally, the aforementioned first capability may include only the capability to support or allow allocation of UE policies related to the UE policies of the local terminal to other terminals.

In this case, the first network device may determine that the first terminal is only able to allocate UE policies related to at least part of its own UE policies to one or more other terminals. Alternatively, the first network device may determine that the first terminal can not only be allocated with UE policies related to at least part of UE policies related to any other terminal, but can also allocate the UE policies related to the first terminal to any other terminal than the first terminal.

The UE policies related to the UE policies of the local terminal may include the first UE-policy part of the UE policies related to the first terminal and/or UE policies related to the second UE-policy part of the UE policies related to the first terminal. The description of the UE policies related to the first terminal is similar to the UE policies related to the second terminal in the foregoing embodiments. Accordingly, the description of the first UE-policy part and the second UE-policy part of the UE policies is also similar to that of the above-described embodiments, and thus the description thereof will not be repeatedly described here.

Optionally, the first capability may include the capability to support or allow allocation of UE policies related to the UE policies of the local terminal to other terminals, and a capability to support or allow allocation of UE policies related to the UE policies of other terminals to the local terminal.

In some possible embodiments, the first terminal may transmit the indication of the first capability and the first information simultaneously.

The indication of the first capability and the first information may both be carried by an uplink UE policy container. The related description of the uplink UE policy container is the same as that of the foregoing embodiments, and will not be described in detail.

When the indication of the first capability is transmitted simultaneously with the first information, the first network device may determine that the first terminal has the first capability, and the first terminal may request the first network device to start a process of allocating UE policies related to UE policies of other terminals to the first terminal and finally generating UE policies of the first terminal.

In some embodiments, in a scenario in which the first terminal simultaneously reports the first information and the indication of the first capability, after the first network device generates the UE policies of the first terminal, the first network device may only transmit the second information to the first terminal, and the content of the second information is not repeated. That is, by transmitting the second information, the first network device implicitly indicates that the first network device supports the first terminal to perform the function corresponding to the first capability, and has completed the allocation of the UE policies of the first terminal related to the UE policies of the second terminal.

Note that, when the first network device receives the first information and the first capability indication at the same time, the first network device may first determine whether or not to allow the first terminal to allocate UE policies related to the UE policies of the first terminal to other terminals, and/or whether or not to allow allocation of UE policies related to the UE policies of other terminals to the first terminal. The specific determination method of the first network device is not limited in the embodiments.

When the first network device determines that the first terminal is allowed to allocate the UE policies related to the UE policies of the first terminal to other terminals and/or the first terminal is allowed to be allocated with the UE policies related to the UE policies of other terminals, the first network device may perform the above-described processing of generating the UE policies of the first terminal and transmitting the second information, which will not be repeated here. In addition, when the first network device determines that the first terminal is not allowed to allocate the UE policies related to the UE policies of the first terminal to other terminals and/or it is not allowed to allocate the UE policies related to the UE policies of other terminals to the first terminal, the related technology may be adopted to allocate the UE policies of the first terminal to the first terminal, and specific generation and transmission methods are not limited in the embodiments.

In some embodiments, in a scenario in which the first terminal simultaneously reports the first information and the indication of the first capability, after the first network device receives the first information and the indication of the first capability, the action of the first network device may further include that: the first network device transmits a first indication, and the first indication is used to indicate at least one of followings: whether the first terminal is allowed to allocate UE policies related to the UE policies of the local terminal to other terminals; and whether the first terminal is allowed to be allocated with UE policies related to the UE policies of other terminals. Accordingly, the action of the first terminal may further include that: the first terminal receives the first indication, wherein the first indication is used to indicate at least one of followings: whether the first terminal is allowed to allocate UE policies related to the UE policies of the local terminal to other terminals; and whether the first terminal is allowed to be allocated with UE policies related to the UE policies of other terminals.

The action of the first network device transmitting the first indication means that the first network device transmits the first indication to the first terminal. The action of the first terminal receiving the first indication means that the first terminal receives the first indication from the first network device.

In the embodiments, the first indication may be transmitted at the same time as the second information after the first network device completes the allocation of the UE policies of the first terminal. Alternatively, the first indication may be transmitted after the first network device confirms that the UE policies can be allocated to the first terminal, in which case, the first network device may have not generated or allocated the UE policies of the first terminal, that is, the first indication may be transmitted before the second information.

Further, if the first indication and the second information are transmitted simultaneously, both the first indication and the second information may be carried by the same downlink UE policy container in a UCU procedure. If the first indication is transmitted before the second information, the first indication and the second information may be carried by different downlink UE policy containers in the UCU procedure, for example, the first indication may be carried by a first downlink UE policy container in the UCU procedure, and the second information may be carried by a second downlink UE policy container in the UCU procedure, wherein the first downlink UE policy container is different from the second downlink UE policy container, and the first downlink UE policy container is earlier than the second downlink UE policy container.

Preferably, the first indication in the embodiments is used at least to indicate that the first network device allows allocation of UE policies related to UE policies of other terminals to the first terminal. In some possible examples, the first indication is used to indicate that the first terminal is allowed to allocate UE policies related to the UE policies of the local terminal to other terminals, and that the first terminal is allowed to be allocated with UE policies related to the UE policies of the other terminal.

In some possible embodiments, the first terminal may transmit the indication of the first capability and the first information at different time. In the embodiments, the first terminal may first transmit the indication of the first capability and then transmit the first information.

The indication of the first capability may be carried by an uplink UE policy container. The uplink UE policy container includes one of an uplink UE policy container in a registration request message and an uplink UE policy container in a registration update message.

It should be pointed out that, in the implementation, the uplink UE policy container carrying the indication of the first capability is different from the uplink UE policy container carrying the first information. For example, the uplink UE policy container carrying the indication of the first capability may be the uplink UE policy container in the registration request message, and the uplink UE policy container carrying the first information may be the uplink UE policy container in the registration update message. For example, the uplink UE policy container carrying the indication of the first capability may be the first uplink UE policy container in the first registration request message, the uplink UE policy container carrying the first information may be the uplink UE policy container in the second registration request message, and the like, and all possible cases are not exhaustive here.

The indication of the first capability is the same as that of the foregoing embodiments, and the description is not repeated.

In the implemenation, the processing after the first network device receives the indication of the first capability may include that: the first network device may first determine whether or not the first terminal is allowed to allocate UE policies related to the UE policies of the local terminal to other terminals, and/or whether or not the first terminal is allowed to be allocated with the UE policies related to the UE policies of the other terminal. When the first network device determines that the first terminal is allowed to allocate UE policies related to the UE policy of the local terminal to other terminals and/or is allowed to be allocated with UE policies related to the UE policies of other terminals, the first network device may transmit a first indication indicating that the first terminal is allowed to be allocated with UE policies related to the UE policies of other terminals. The first indication may be carried by a downlink UE policy container in the UCU procedure.

In addition, the processing may further include that: when the first network device determines that the first terminal is not allowed to allocate the UE policies related to the UE policies of the local terminal to other terminals and it is not allowed to allocate the UE policies related to the UE policies of other terminals to the first terminal, the first network device may transmit first information indicating that the UE policies related to the UE policies of other terminals are not allowed to be allocated to the first terminal. In a case where the first network device transmits the first information indicating that the allocation of UE policies related to UE policies of other terminals to the first terminal is not allowed, the first network device may perform subsequent processing by adopting a rule of a related protocol, and no limit is set in the embodiments.

In some embodiments, in the scenario in which the first terminal separately transmits the indication of the first capability before transmitting the first information, when the first network device receives the indication of the first capability and transmits the first indication indicating that the first terminal is allowed to be allocated with UE policies related to the UE policies of other terminals, the action of the first network device may further include one of the following:
when the first network device determines that there are allocated UE policies of the first terminal and the allocated UE policies of the first terminal include UE policies that can be allocated to other terminals, the first network device may perform no operation;
when the first network device determines that there are allocated UE policies of the first terminal and the allocated UE policies of the first terminal do not include UE policies that can be allocated to other terminals, the first network device updates the allocated UE policies of the first terminal based on the first capability of the first terminal to generate UE policies of the first terminal that can be allocated to other terminals; and
when the first network device determines that there is no UE policy of the first terminal, the first network device generates, based on the first capability of the first terminal, UE policies of the first terminal available for allocation to other terminals.

Here, updating the allocated UE policies of the first terminal may refer to deleting or adjusting at least part of the allocated UE policies of the first terminal, and/or adding new UE policies that can be allocated to other terminals to the allocated UE policies of the first terminal.

The present embodiment is not limited to specific processing methods of deletion, adjustment, or addition. The present embodiment does not limit a specific processing method of generating UE policies of the first terminal that can be allocated to other terminals based on the first capability of the first terminal.

In a case where the first network device generates UE policies of the first terminal available for allocation to other terminals, the first network device may further perform a process in which the first network device transmits third information, wherein the third information includes the UE policies of the first terminal available for allocation to other terminals. Accordingly, after the first terminal transmits the indication of the first capability, the method may further include: the first terminal receives the third information.

It should be noted that the first network device may also generate UE policies of the first terminal that cannot be allocated to other terminals. Accordingly, the third information may include UE policies of the first terminal that cannot be allocated to other terminals in addition to the UE policies of the first terminal that can be allocated to other terminals. That is, the UE policies of the first terminal available for allocation to other terminals may be part of all the UE policies allocated to the first terminal this time.

Here, the third information may be carried by a downlink UE policy container, which may be a downlink UE policy container in a UCU procedure. In the embodiments, since the third information and the second information are not transmitted at the same time, the downlink UE policy container carrying the third information is different from the downlink UE policy container carrying the second information. For example, the third information may be carried by the downlink UE policy container in the first UCU procedure initiated or triggered by the first network device, and the second information may be carried by the downlink UE policy container in the second UCU procedure initiated or triggered by the first network device.

**In** some embodiments, in the scenario in which the first terminal transmits the indication of the first capability before transmitting the first information, after the first network device receives the indication of the first capability, the action of the first network device may further include that: the first network device transmits the first indication. The description of the first indication is the same as that of the foregoing embodiments, and will not be repeated.

**In** some examples, when the first network device determines that there are allocated UE policies of the first terminal and that the allocated UE policies of the first terminal include UE policies that can be allocated to other terminals, the first network device may transmit only a first indication to the first terminal, and the first indication is used to indicate that UE policies related to the UE policies of the first terminal are allowed to be allocated to other terminals and/or UE policies related to the UE policies of other terminals are allowed to be allocated to the first terminal.

**In** some examples, in a case where the first network device generates UE policies of the first terminal that can be allocated to other terminals, the first network device may transmit the foregoing third information to the first terminal and transmit a first indication, and the first indication is used to indicate that the UE policies related to the UE policies of the first terminal are allowed to be allocated to other terminals and/or the UE policies related to the UE policies of other terminals are allowed to be allocated to the first terminal.

The third information and the first indication may be transmitted simultaneously, for example, the third information and the first indication may be carried by the same downlink UE policy container in the UCU procedure, or the third information and the first indication may be carried by different downlink UE policy containers in the UCU procedure, and the order in which the first network device transmits the first indication and the third information is not limited.

**In** some examples, when the first network device determines that the first terminal is not allowed to perform the function corresponding to the first capability, the first network device may transmit a first indication to the first terminal to indicate that the first terminal is not allowed to allocate UE policies related to the UE policy of the local terminal to other terminals and/or it is not allowed to allocate UE policies related to the UE policies of other terminals to the first terminal. In this case, the first network device executes the subsequent processing flow specified in the relevant protocol for the first terminal, and is not limited here.

**In** some embodiments, the first terminal may transmit the first information to the first network device after receiving the third information and/or the first indication, and the processing after the first network device receives the first information is the same as in the foregoing embodiments, and will not be repeated here.

In some possible embodiments, the action of transmitting the first information by the first device can only be performed on the basis that the UE policies related to the second terminal have been allocated on the network side (for example, the first network device serving the first terminal and the second terminal, or the second network device serving the second terminal). Therefore, the processing needed to be carried out by the second terminal and the second network device before the first device transmits the first information will be described next.

The action of the second terminal transmitting the indication of the first capability may include that: the second terminal transmits the indication of the first capability to the second network device. Accordingly, the action of the second network device receiving the indication of the first capability of the second terminal may be that the second network device receives the indication of the first capability of the second terminal from the second terminal. The indication of the first capability is configured to indicate that the second terminal has the first capability, and the first capability includes at least one of: a capability to support or allow allocation of UE policies related to the UE policies of the local terminal to other terminals, and a capability to support or allow allocation of UE policies related to the UE policies of other terminals to the local terminal.

It should be noted that the network devices corresponding to the second terminal are all referred to as second network devices hereinafter, but the description of the second network device hereinafter does not mean that such description cannot be applied to the first network device. In a case where the first network device serves both the first terminal and the second terminal, the second network device hereinafter can be replaced with the first network device, and the description will not be repeated.

The indication of the first capability of the second terminal may be carried by an uplink UE policy container. The uplink UE policy container may include at least one of an uplink UE policy container in a registration request message and an uplink UE policy container in a registration update message.

Specifically, the action of the second terminal transmitting the indication of the first capability to the second network device may include that: the second terminal carries the indication of the first capability in the uplink UE policy container in the registration request message or the registration update message, transmits the registration request message or the registration update message to a fifth network device, and the fifth network device transmits the uplink UE policy container carrying the indication of the first capability of the second terminal to the second network device. Accordingly, the action of the second network device receiving the indication of the first capability of the second terminal from the second terminal may include that: the second network device receives, through the fifth network device, the uplink UE policy container carrying the indication of the first capability of the second terminal from the second terminal. The fifth network device may be an AMF serving the second terminal.

The second terminal may be any terminal other than the first terminal, or the second terminal may be any terminal having the first capability and having a binding relationship with the first terminal. When mentioning the first capability of the second terminal, the local terminal refers to the second terminal. Any one of the one or a plurality of other terminals refers to any other terminal than the second terminal.

The indication of the first capability of the second terminal may indicate that the second terminal has the first capability by a piece of description information, or the indication of the first capability of the second terminal may indicate whether the second terminal has the first capability by a value of an indication bit.

Regarding the first capability of the second terminal, the detailed description of the first capability of the first terminal is similar to that of the foregoing embodiments, and thus the description will not be repeated.

In some embodiments, after the second network device receives the indication of the first capability of the second terminal, the action of the second network device may further include: the second network device generates UE policies corresponding to the second terminal based on the first capability of the second terminal.

Specifically, the action of the second network device may include one of the following:
when the second network device determines that there are allocated UE policies of the second terminal and the allocated UE policies of the second terminal include UE policies that can be allocated to other terminals, the second network device may operate nothing;
when the second network device determines that there are allocated UE policies of the second terminal and the allocated UE policies of the second terminal do not include UE policies that can be allocated to other terminals, the second network device updates the allocated UE policies of the second terminal based on the first capability of the second terminal to generate UE policies corresponding to the second terminal; and
when the second network device determines that there is no allocated UE policy of the second terminal, the second network device generates UE policies corresponding to the second terminal based on the first capability of the second terminal.

Updating the allocated UE policies of the second terminal to generate the UE policies corresponding to the second terminal may mean that: at least part of the allocated UE policies of the second terminal are deleted or adjusted to generate the UE policies corresponding to the second terminal; and/or new UE policies that can be allocated to other terminals are added to the UE policies corresponding to the second terminal.

The embodiments are not limited to specific processing methods of deletion, adjustment, or addition. The embodiments do not limit a specific processing method for generating UE policies corresponding to the second terminal based on the first capability of the second terminal.

In a case where the second network device generates UE policies corresponding to the second terminal, the second network device may further transmit fourth information, wherein the fourth information includes UE policies corresponding to the second terminal, and the UE policies corresponding to the second terminal include UE policies available for allocation to other terminals. Accordingly, after the second terminal transmits the indication of the first capability, the method may further include: the second terminal receives the fourth information.

Here, the fourth information may be carried by a downlink UE policy container, which may be a downlink UE policy container in a UCU procedure. The action of transmitting the fourth information by the second network device may include: carrying the fourth information in a downlink UE policy container, initiating or triggering a UCU procedure, and transmitting the downlink UE policy container to the second terminal through the fifth network device in the UCU procedure. The action of receiving the fourth information by the second terminal may include: receiving a downlink UE policy container from the second network device through the fifth network device in the UCU procedure, and acquiring UE policies corresponding to the second terminal included in the fourth information from the downlink UE policy container.

In some embodiments, after the second network device receives the indication of the first capability of the second terminal, the method may further include: the second network device transmits a second indication, wherein the second indication indicates at least one of: whether the second terminal is allowed to allocate UE policies related to the UE policies of the local terminal to other terminals; and whether the second terminal is allowed to be allocated with UE policies related to the UE policies of other terminals.

After receiving the indication of the first capability of the second terminal, the second network device may determine whether or not to allow the second terminal to allocate UE policies related to the UE policies of the local terminal to other terminals, and/or whether it is allowed to allocate UE policies related to the UE policies of other terminals to the second terminal.

In some examples, when the second network device determines that there are allocated UE policies of the second terminal and the allocated UE policies of the second terminal include UE policies that can be allocated to other terminals, the second network device may transmit only a first indication to the first terminal to indicate that the second terminal is allowed to allocate UE policies related to the UE policies of the local terminal to other terminals, and/or it is allowed to allocate UE policies related to UE policies of other terminals to the second terminal.

In some examples, when the second network device generates UE policies corresponding to the second terminal, the second network device may transmit the foregoing fourth information to the second terminal and transmit a second indication, and the second indication indicates that the UE policies related to the UE policies of the second terminal are allowed to be allocated to other terminals, and/or the UE policies related to the UE policies of other terminals are allowed to be allocated to the second terminal.

The fourth information and the second indication may be transmitted simultaneously, for example, the fourth information and the second indication may be carried by the same downlink UE policy container in the UCU procedure, or the fourth information and the second indication may be carried by different downlink UE policy containers in the UCU procedure.

In some examples, when the second network device determines that the second terminal is not allowed to perform the function corresponding to the first capability, the second network device may transmit to the second terminal a second indication indicating that the second terminal is not allowed to allocate UE policies related to the UE policy of the local terminal to other terminals and/or it is not allowed to allocate UE policies related to the UE policies of other terminals to the second terminal. In this case, the second network device executes the subsequent processing flow specified in the relevant protocol for the second terminal, and is not limited here.

In some possible implemenations, after the second terminal receives the fourth information, the method may further include: the second terminal transmits a policy update indication, wherein the policy update indication is used to determine a UE policy used by the second terminal from UE policies corresponding to the second terminal. After the second network device transmits the fourth information, the method may further include that the second network device receives the policy update indication which is used to determine the UE policy used by the second terminal from the UE policies of the second terminal.

The description of the policy update indication is the same as that of the foregoing embodiments, and will not be described in detail.

The method of the second terminal transmitting the policy update indication may include that: the second terminal reports the policy update indication to SMF during PDU session modification/establishment, and the policy update indication may include that the PDU session is established using a UE policy; and the SMF transmits the policy update indication to the second network device.

Alternatively, the manner in which the second terminal transmits the policy update indication may include that the second terminal carries the policy update indication in the uplink UE policy container, triggers a registration procedure, transmits the uplink UE policy container to the fifth network device, and the fifth network device transmits the uplink policy container to the second network device.

It should be understood that the above embodiments only describes how to generate the UE policy correponding to the second terminal, and in actual processing, after allocation of the UE policy correponding to the second terminal is completed, the second terminal may also perform transmission of the first information which is carried out by the first terminal and the related processing thereafter, for example, the second terminal may be used as a new first terminal in the foregoing embodiments, and the third terminal may be used as a new second terminal in the foregoing embodiments, to perform various processes related to the first terminal in the foregoing embodiments, and the description will not be repeated here.

Hereinafter, the communication method provided by the present embodiment will be illustratively described in connection with various embodiments.

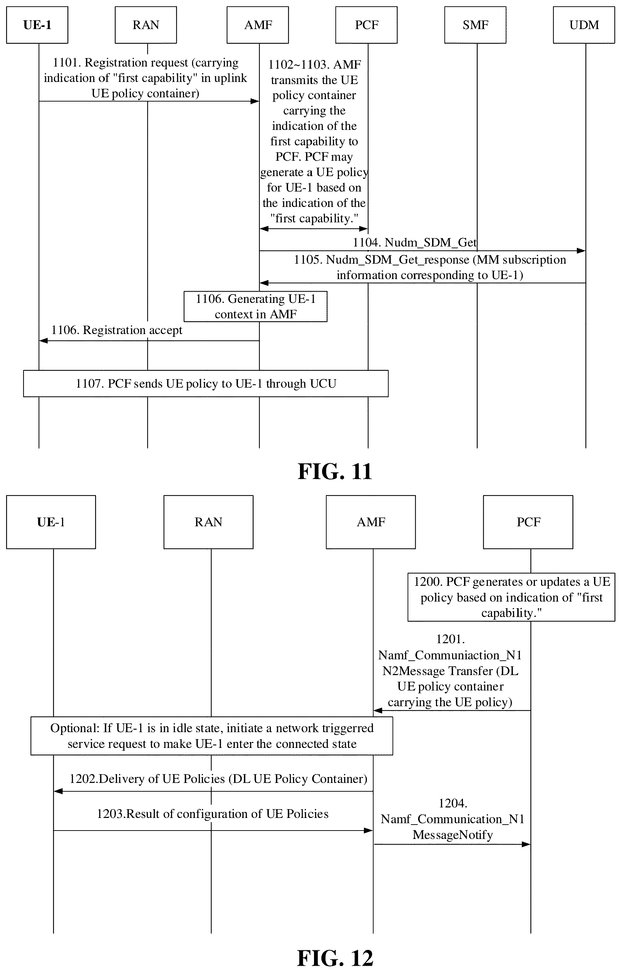

In connection with FIG. 11, a related flow of transmitting the indication of the first capability by the first terminal or the second terminal is exemplarily described.

In step 1101: UE-1 transmits a Registration request to AMF, specifically, carrying the indication of "first capability" in the uplink UE Policy Container in the Registration request.

In steps 1102-1103: the AMF transmits the supported UE policy container carrying the first capability to PCF. The PCF may generate a UE policy for the UE-1 according to the indication of the "first capability". For example, the UE policy may be applied to other UEs, and part of the UE policy for UE-1 is added, deleted, or updated according to the "first capability" of the UE.

In this embodiment, since only one UE reporting the first capability is described, FIG. 11 can include only one UE.

In a case, the UE-1 in FIG. 11 may be the aforementioned second terminal, and the PCF in FIG. 11 may be the aforementioned second network device serving the second terminal (such as the second PCF in the aforementioned embodiments). The indication of the first capability in step 1101 may be the indication of the first capability of the second terminal in the foregoing embodiments.

In another case, the UE-1 in FIG. 11 may be the first terminal, and the PCF in FIG. 11 may be the first network device serving the first terminal (such as the first PCF in the embodiment described above). The indication of the first capability in step 1101 may be the indication of the first capability of the first terminal in the foregoing embodiments.

It should be understood that in some possible cases, the PCF may be a network device serving the first terminal and the second terminal.

In step 1103, the AMF may forward the uplink UE policy container to the PCF through the PCF association est./mod., and in turn, the PCF may transmit a UE policy which is the same as that of UE-1 or associated with UE1 to another UE-2 according to the "first capability" indication.

In step 1104 to step 1106: the AMF sends a message to UDM to request for subscription information (specifically, the message may be a user subscription data acquisition service (Nudm_SDM_Get) message as shown in FIG. 11), the UDM replies to the AMF with MM subscription information corresponding to the UE-1, the AMF generates UE Context in AMF based on the MM subscription information, and the AMF transmits a Registration accept to the UE-1. The MM subscription information corresponding to the UE-1 replied by the UDM to the AMF may be carried by a user subscription data acquisition service response message (Nudm_SDM_Get_response) shown in FIG. 11.

In step 1107: the PCF triggers the UCU procedure to transmit the UE policy to UE-1.

When the UE-1 is the first terminal of the foregoing embodiments, the UE policy of the UE-1 may include UE policies of the first terminal that can be allocated to other terminals in the foregoing embodiments. When the UE-1 is the second terminal of the foregoing embodiments, the UE policy of the UE-1 may be the UE policies corresponding to the second terminal in the foregoing embodiments.

The UCU procedure may be independent of the registration process, and the sequence of occurrence may be independent of other steps (e.g., occurring at some time point prior to step 1106 of the registration process).

It should be noted that other network devices, such as SMF and RAN, are also illustrated in FIG. 11, and the SMF is a device on the core network side. In order to illustrate the integrity of the architecture, the RAN may be an access network device serving UE, and the role of the RAN in the example of FIG. 11 is also not limited.

Referring to FIG. 12, taking the second terminal as UE-1 in FIG. 12 and the second network device as PCF in FIG. 12 as an example, a process in which the PCF triggers the UCU procedure to transmit the UE policy of the UE to the UE will be further described.

In step 1200: PCF generates or updates a UE policy according to the indication of the "first capability" and/or generates a "first indication" for indicating at least one of followings: whether UE-1 is allowed to migrate UE policies of other UEs; and whether the UE-1 is allowed to let other UEs migrate the UE policy of UE1. The first indication may be the second indication transmitted by the second network device to the second terminal in the foregoing embodiments.

In some possible cases, the PCF may predetermine: the content of the UE policy allowed for migration, such as a specific UE policy allowed for migration, such as URSP; the rules under the UE policy allowed for migration, such as URSP rules that contain the Connection Capability parameter in URSP; the content of a certain rule that is allowed for migration, such as a TD that contains specific parameters in URSP.

In some possible cases, the first indication may also include content of the UE policy allowed for migration, such a specific UE policy allowed for migration, such as URSP; the rules under the UE policy allowed for migration, such as URSP rules that contain the Connection Capability parameter in URSP; the content of a certain rule that is allowed for migration, such as a TD that contains specific parameters in URSP.

In step 1201: the PCF puts the generated UE policy into the downlink UE policy container, calls the N1 and N2 interface communication message transfer message (Namf_Communiaction_N1N2 Message Transfer) to transmit the downlink UE policy container carrying the UE policy to the AMF.

In step 1202: the AMF transmits the downlink UE policy container to the UE-1 via a DL NAS Transport message.

It should be noted that prior to step 1202, there may also be an optional step: if the UE-1 is in an idle state, the AMF initiates a Network Triggered Service Request to cause the UE-1 to enter the connected state.

In steps 1203-1204: UE-1 configures a reply message after the UE policy, and feeds back whether the configuration is successful to the PCF through the AMF. In step 1203, the UE-1 transmits the configuration result of the UE policy to the AMF, and in step 1204, the AMF transmits the configuration result of the UE policy to the PCF through an N1 interface notification message (Namf_Communication_N1 MessageNotify).

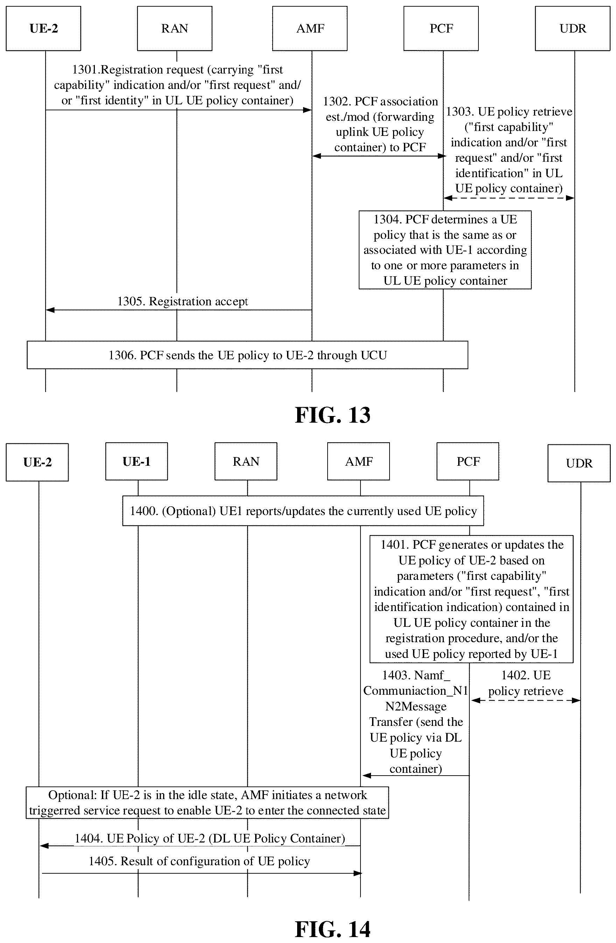

Referring to FIG. 13, when UE-2 (the first terminal in the foregoing embodiments) receives part or all of the services of UE-1 (the second terminal in the foregoing embodiments), it is necessary to transmit the UE policy of the UE-1 to the UE-2 for use.

In step 1301: UE transmits a registration request message to AMF, the registration request message containing an uplink UE Policy Container, and the uplink UE Policy Container carries at least one of the following parameters: an indication of "first capability"; "First request", used to indicate that part or all of information such as policies of other UEs is required to be allocated to the UE for use; and "first identifier" which includes one or more of the following: 1) identifier of associated UE-1: i.e., UE policy or the like of which UE is to be allocated; 2) identifier of associated service (or application): that is, UE policy or the like corresponding to which service is to be allocated, and this identifier may be used together with 1) to further limit the content to be allocated, or may be used alone; 3) identifier of associated user: that is, UE policy or the like corresponding to which user identifier is to be allocated, and multiple UEs such as UE-1 and UE-2 may be used by the same user, so the user identifier can be associated with information such as context between multiple UEs.

In step 1302: the AMF may forward the uplink UE policy container to the PCF through the PCF association est./mod.

In step 1303 (optional): the PCF performs a UE Policy retrieve for the UDR, and transmits an indication of "first capability" and/or "first request" and/or "first identifier" in the uplink UE policy container to the UDR during the retrieval process.

In step 1304: the PCF determines a UE policy that is the same as that of UE1 or is associated with UE-1 based on one or more parameters in the uplink UE policy container. The one or more parameters refer to the indication of "first capability" and/or "first request" and/or "first identifier".

In step 1305: the AMF transmits a Registration accept to the UE-2.

In step 1306: the PCF transmits the UE policy to the UE-2 through the UCU procedure. The UCU procedure may be independent of the registration process, and the sequence of occurrence of the UCU procedure may be independent of other steps (e.g., occurring at some time point prior to step 1305 of the registration process).

The processing of allocating the UE policy of UE-2 by PCF will be described with reference to FIG. 14.

In step 1400: UE-1 reports/updates a currently used UE policy.

This step is optional and applies to a "dynamic mode". When a UE (any one UE) receives a UE policy, the UE may use different UE policies due to differences in time, usage, and implementation. In other words, in some cases, even if the UE policies transmitted by a plurality of UEs are the same, different UEs may use different rules under the same UE policy. Therefore, when the UE policy is migrated, the "dynamic mode" allows UE2 to use the UE policy rules currently used by the UE-1, so that the consistency of service experience can be better guaranteed.

For example, the URSP includes rule-1 and rule-2, and both rules can be used for the Tencent video service. When a user uses UE-1, the UE-1 uses rule-1 to establish a PDU session to transmit related data of the Tencent video service of the user. When the user subsequently uses UE-2, the UE-2 should also use rule-1 (instead of rule-2) to transmit the video service of the user. The session configuration parameters of different rules may be different, which may affect the service experience.

There are two ways for UE-1 to report/update the currently used UE policy: UE-1 reports which URSP rule and/or RSD was used for establishment of the session during the PDU session establishment/modification process, and this information may be further transmitted to the PCF through the SMF; the UE-1 reports the URSP rule and/or the RSD currently in use using the UE Policy Container, and the UE-1 may transmit the information to the PCF by triggering the registration procedure and carrying the UE Policy Container. Note: In this example, URSP is taken as an example, and other UE policies can also be considered, but this embodiment is not exhaustive.

In step 1401: the PCF generates or updates the UE policy of the UE-2 according to the parameters ("first capability" indication and/or "first request", "first identifier") included in the uplink UE policy container of the registration procedure, and/or the used UE policy reported by the UE-1 (such as the policy update indication in the foregoing embodiments).

In step 1402 (optional), when the PCF generates or updates the UE policy of the UE-2, the PCF may interact with the UDR to jointly make a determination.

The UE policy of the UE-2 generated from the above parameters and information may include the following possibilities:
1) only UE policies needed for UE-2 are included, such as in the example in step 0, if the PCF only wants UE-2 to use rule-1 currently used by UE-1, then the UE policy only includes rule-1 but does not include rule-2;
2) "second indication" (i.e., selection indication information in the foregoing embodiments) is included in the UE policy transmitted for the UE-2, and the "second indication" is used to indicate which rules are being used by the UE-1 or which rules are preferentially or required to be used by the UE-2; and
3) the UE policy of the UE-2 directly copies the policy contents (parameters) of the UE-1, or there is an association relationship between the UE policies of the UE-1 and the UE-2, but the values of the contents or parameters are different. For example, the UE policies of UE-1 and UE-2 correspond to the same User ID, or the TD parameters in the URSP rules of UE-1 and UE-2 are the same, but the RSD parameters under each TD are different.

In steps 1403-1405: the PCF transmits the UE policy to the UE-2, and receives from the UE-2 a reply message which feeds back whether the configuration is successful.

In step 1403, the PCF puts the generated UE policy of the UE-2 into the downlink UE policy container, calls the N1 and N2 interface communication message transfer message (Namf_Communiaction_N1N2 Message Transfer) to transmit the downlink UE policy container to the AMF.

It should be noted that before step 1404, there may also be an optional step: if the UE-2 is in the idle state, the AMF initiates a Network Triggered Service Request to cause the UE-2 to enter the connected state.

In step 1404: the AMF transmits the downlink UE policy container carrying the UE policy of the UE-2 to the UE-2 via a DL NAS Transport message.

In step 1405, the UE-2 transmits the configuration result of the UE policy to the AMF.

By adopting the solution provided by the above embodiment, the first terminal may request to allocate UE policies related to UE policies of other terminals by transmitting the first information, and the first terminal may then receive second information including the UE policies of the first terminal related to the UE policies of the second terminal. As described above, by allocating the UE policies related to the second terminal to the first terminal, it is possible to realize migration of at least part of the services of the second terminal to different devices, thereby realizing collaboration on the same service across a plurality of devices, and ensuring the communication capability unchanged or optimized while realizing the service migration, thereby ensuring service continuity.

Further, the solution provided by the foregoing embodiments can be enhanced in the existing process, has a controllable impact on the existing architecture, and can realize policy migration between different terminals. In the foregoing embodiments, migration or replication of the specific UE policy content may be realized by indicating a first identifier, such as a first-service identifier, a first-user identifier, or an association relationship between terminals, thereby realizing multi-terminal collaboration on specific user's services across different devices by supporting the requirements on communication, computing, and service continuity according to the requirements of scenarios, and achieving the best service experience.

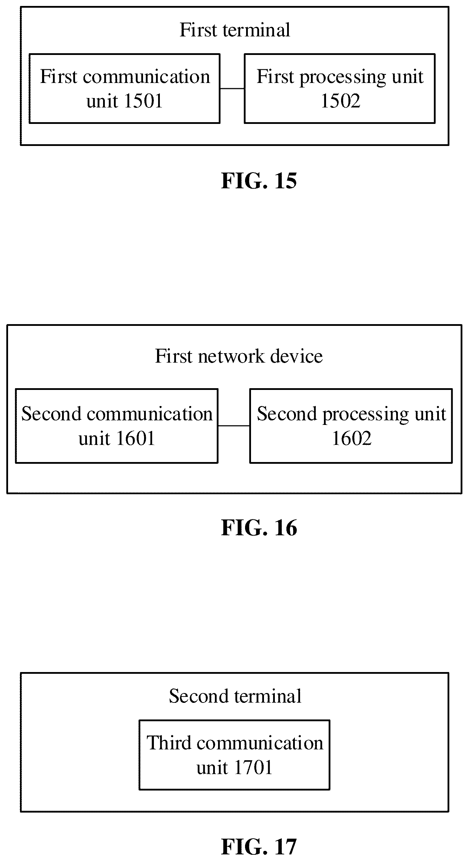

FIG. 15 is a schematic diagram of a composition and structure of a first terminal according to an embodiment of the present disclosure, including the following components.

A first communication unit 1501 is configured to: transmit first information which is configured to request allocation of UE policies related to UE policies of other terminals; and receive second information which includes UE policies of the first terminal, the UE policies of the first terminal being related to UE policies of a second terminal.

The UE policies of the first terminal includes at least one of followings: a first UE-policy part of UE policies related to the second terminal; and UE policies related to a second UE-policy part of the UE policies related to the second terminal.

The UE policies related to the second terminal include at least one of followings: at least part of UE policies corresponding to the second terminal; at least part of UE policies corresponding to a first service run by the second terminal; and at least part of UE policies corresponding to a first user using the second terminal.

The second information may further include selection indication information which indicates at least one of a UE policy used by the second terminal and a UE policy preferentially selected by the first terminal.

As shown in FIG. 15, the first terminal may further include:
a first processing unit 1502, configured to select, from among the UE policies of the first terminal, a UE policy used by the first terminal based on the selection indication information.

The first information includes a first identifier, wherein the first identifier includes at least one of: an identifier of the second terminal, an identifier of a first service, and an identifier of a first user.

The first information may be carried by an uplink UE policy container; and the second information may be carried by a downlink UE policy container.

The first communication unit is configured to transmit an indication of a first capability, wherein the indication of the first capability is configured to indicate that the first terminal has the first capability, and the first capability includes at least one of: a capability to support or allow allocation of UE policies related to the UE policies of the local terminal to other terminals, and a capability to support or allow allocation of UE policies related to the UE policies of other terminals to the local terminal.

The first communication unit is configured to receive a first indication, wherein the first indication is configured to indicate at least one of followings: whether the first terminal is allowed to allocate UE policies related to the UE policies of the first terminal to other terminals; and whether the first terminal is allowed to be allocated with UE policies related to the UE policies of other terminals.

The first communication unit is configured to receive third information, wherein the third information includes UE policies of the first terminal available for allocation to other terminals.

The indication of the first capability may be carried by an uplink UE policy container; and the third information may be carried by a downlink UE policy container.

The uplink UE policy container may include at least one of followings: an uplink UE policy container in a registration request message, and an uplink UE policy container in a registration update message;
The downlink UE policy container is a downlink UE policy container in a UE configuration update UCU procedure.

FIG. 16 is a schematic diagram of a composition structure of a first network device according to an embodiment of the present disclosure, including the following components.

A second communication unit 1601 is configured to: receive first information, wherein the first information is configured to request allocation of UE policies related to UE policies of other terminals for the first terminal; and transmit second information, wherein the second information includes UE policies of the first terminal, and the UE policies of the first terminal are related to UE policies of a second terminal.

The UE policies of the first terminal includes at least one of followings: a first UE-policy part of UE policies related to the second terminal; and UE policies related to a second UE-policy part of the UE policies related to the second terminal.

The UE policies related to the second terminal include at least one of followings: at least part of UE policies corresponding to the second terminal; at least part of UE policies corresponding to a first service run by the second terminal; and at least part of UE policies corresponding to a first user using the second terminal.

The second information may further include selection indication information which indicates at least one of a UE policy used by the second terminal and a UE policy preferentially selected by the first terminal.

The first information may include a first identifier, wherein the first identifier includes at least one of: an identifier of the second terminal, an identifier of a first service, and an identifier of a first user.

As shown in FIG. 16, the first network device may further include a second processing unit 1602.

The second processing unit is configured to generate UE policies of the first terminal based on the UE policies related to the second terminal;
The second communication unit is configured to acquire UE policies related to the second terminal.

The second communication unit is configured to perform one of: acquiring UE policies related to the second terminal from a second network device, wherein the second network device serves the second terminal; and acquiring the UE policies related to the second terminal from a third network device.

The second communication unit is configured to obtain a policy update indication of the second terminal, wherein the policy update indication is used to determine a UE policy used by the second terminal from the UE policies of the second terminal.

The first information may be carried by an uplink UE policy container; and the second information may be carried by a downlink UE policy container.

The second communication unit is configured to receive an indication of a first capability from the first terminal, wherein the indication of the first capability is configured to indicate that the first terminal has the first capability, and the first capability includes at least one of: a capability to support or allow allocation of UE policies related to the UE policies of the local terminal to other terminals, and a capability to support or allow allocation of UE policies related to the UE policies of other terminals to the local terminal.

The second communication unit is configured to transmit a first indication to the first terminal, wherein the first indication is configured to indicate at least one of followings: whether the first terminal is allowed to allocate UE policies related to the UE policies of the local terminal to other terminals; and whether the first terminal is allowed to be allocated with UE policies related to the UE policies of other terminals.

The second communication unit is configured to transmit third information, wherein the third information includes UE policies of the first terminal available for allocation to other terminals.

The second processing unit is configured to generate UE policies of the first terminal available for allocation to other terminals based on the first capability of the first terminal.

The indication of the first capability may be carried by an uplink UE policy container; and the third information may be carried by a downlink UE policy container.

The downlink UE policy container is a downlink UE policy container in a UE configuration update (UCU) procedure.

The third network device may include at least one of followings: a unified data management function (UDM), and a unified data repository function (UDR). The second network device may include a second policy control function (PCF).

The first network device may include a first policy control function (PCF).

FIG. 17 is a schematic diagram of a composition structure of a second terminal according to an embodiment of the present disclosure, including the following components.

A third communication unit 1701 is configured to transmit an indication of a first capability, wherein the indication of the first capability is configured to indicate that the second terminal has the first capability, and the first capability includes at least one of: a capability to support or allow allocation of UE policies related to the UE policies of the local terminal to other terminals, and a capability to support or allow allocation of UE policies related to the UE policies of other terminals to the local terminal.

The third communication unit is configured to receive a second indication, wherein the second indication is configured to indicate at least one of followings: whether the second terminal is allowed to allocate UE policies related to the UE policies of the local terminal to other terminals; and whether the second terminal is allowed to be allocated with UE policies related to the UE policies of other terminals.

The third communication unit is configured to receive fourth information, wherein the fourth information includes UE policies corresponding to the second terminal, and the UE policies corresponding to the second terminal include UE policies available for allocation to other terminals.

The third communication unit is configured to transmit a policy update indication, wherein the policy update indication is used to determine a UE policy used by the second terminal from the UE policies corresponding to the second terminal.

The indication of the first capability may be carried by an uplink UE policy container; and the fourth information may be carried by a downlink UE policy container.

The uplink UE policy container may include at least one of followings: an uplink UE policy container in a registration request message, and an uplink UE policy container in a registration update message. The downlink UE policy container may be a downlink UE policy container in a UE configuration update (UCU) procedure.

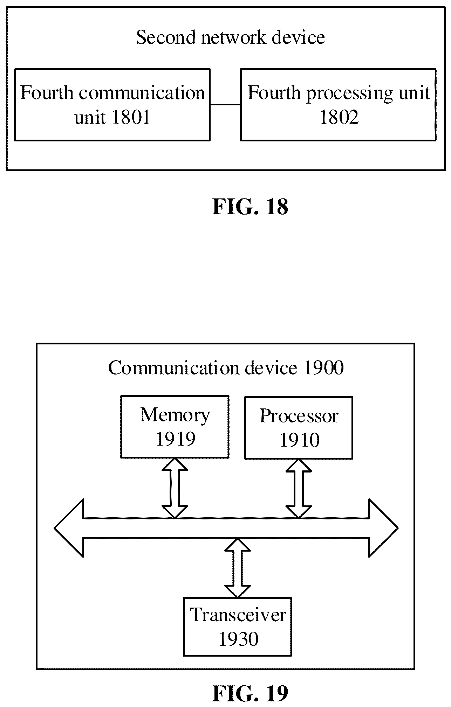

FIG. 18 is a schematic diagram of a composition structure of a second network device according to an embodiment of the present disclosure, including components below.

A fourth communication unit 1801 is configured to receive an indication of a first capability of a second terminal, wherein the indication of the first capability is configured to indicate that the second terminal has the first capability, and the first capability includes at least one of: a capability to support or allow allocation of UE policies related to the UE policies of the local terminal to other terminals, and a capability to support or allow allocation of UE policies related to the UE policies of other terminals to the local terminal.

The fourth communication unit is configured to transmit a second indication, wherein the second indication is configured to indicate at least one of followings: whether the second terminal is allowed to allocate UE policies related to the UE policies of the local terminal to other terminals; and whether the second terminal is allowed to be allocated with UE policies related to the UE policies of other terminals.

The fourth communication unit is configured to transmit fourth information, wherein the fourth information includes UE policies corresponding to the second terminal, and the UE policies corresponding to the second terminal include UE policies available for allocation to other terminals.

As shown in FIG. 18, the second network device may further include:
A fourth processing unit 1802, configured to generate UE policies corresponding to the second terminal based on the first capability of the second terminal.

The indication of the first capability may be carried by an uplink UE policy container; and the fourth information may be carried by a downlink UE policy container.

The uplink UE policy container may include at least one of followings: an uplink UE policy container in a registration request message, and an uplink UE policy container in a registration update message. The downlink UE policy container may be a downlink UE policy container in a UE configuration update (UCU) procedure.

The fourth communication unit is configured to receive a policy update indication, wherein the policy update indication is used to determine a UE policy used by the second terminal from the UE policies of the second terminal.

The second network device may include a second policy control function (PCF).

The device according to the embodiment of the present disclosure can realize the corresponding function of each device in the above-described communication method embodiments. The flow, function, implementation, and beneficial effect of each module (sub-module, unit, component, etc.) in the first terminal, the first network device, the second terminal, or the second network device are be described in the embodiments of the above methods, and will not be repeatedly described herein. The functions described with respect to each module (sub-module, unit, component, etc.) in the first terminal, the first network device, the second terminal, or the second network device of the application embodiments may be implemented by different modules (sub-modules, units, components, etc.), or may be implemented by the same module (sub-module, unit, component, etc.).

FIG. 19 is a schematic structural diagram of a communication device 1900 according to an embodiment of the present disclosure. The communication device 1900 includes a processor 1910 that can call and run a computer program from a memory to cause the communication device 1900 to implement the methods in the embodiments of the present disclosure. In a possible implementation, the communication device 1900 may further include a memory 1920. Here, the processor 1910 may call and run a computer program from the memory 1920 to cause the communication device 1900 to implement the methods in the embodiments of the present disclosure. The memory 1920 may be a separate device independent of the processor 1910 or may be integrated in the processor 1910. In a possible implementation, the communication device 1900 may further include a transceiver 1930 that may be controlled by the processor 1910 to communicate with other devices, in particular, may transmit information or data to or receive information or data from other devices. Here, the transceiver 1930 may include a transmitter and a receiver. The transceiver 1930 may further include antennas, and the number of antennas may be one or more.

In a possible implementation, the communication device 1900 may be the first terminal, the first network device, the second terminal, or the second network device according to the embodiments of the present disclosure, and the communication device 1900 may implement corresponding procedures implemented by the first terminal, the first network device, the second terminal, or the second network device in each method according to the embodiments of the present disclosure, and will not be described herein for the sake of brevity.

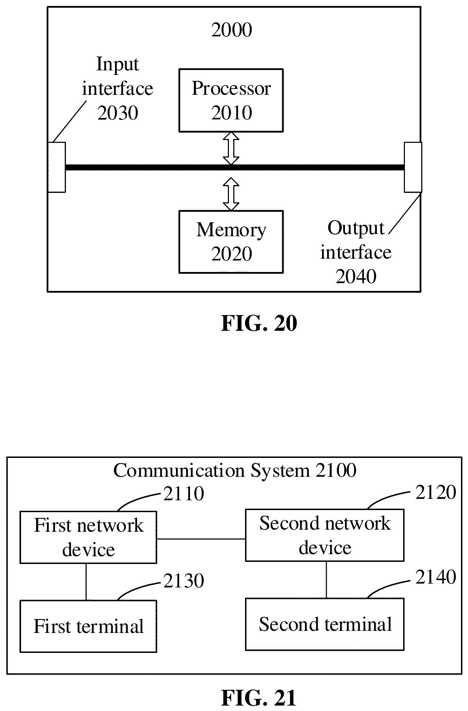

FIG. 20 is a schematic structural diagram of a chip 2000 according to an embodiment of the present disclosure. The chip 2000 includes a processor 2010, and the processor 2010 can call and run a computer program from a memory to implement the methods in the embodiments of the present disclosure. In a possible implementation, the chip 2000 may further include a memory 2020. The processor 2010 may call and run a computer program from the memory 2020 to implement the method executed by the first device or a target second device in the embodiments of the present disclosure. Here, the memory 2020 may be a separate device independent of the processor 2010 or may be integrated in the processor 2010. In a possible implementation, the chip 2000 may further include an input interface 2030. Here, the processor 2010 may control the input interface 2030 to communicate with other devices or chips, specifically, the input interface 2030 may acquire information or data from other devices or chips. In a possible implementation, the chip 2000 may further include an output interface 2040. The processor 2010 may control the output interface 2040 to communicate with other devices or chips, specifically, the output interface 2040 may output information or data to other devices or chips.

In a possible implementation, the chip can be applied to the first terminal device, the first network device, the second terminal, or the second network device in the embodiments of the present disclosure, and the chip can implement corresponding processes implemented by the first terminal device, the first network device, the second terminal, or the second network device in each method of the embodiments of the present disclosure, and will not be repeatedly described here for the sake of brevity. It should be understood that the chip mentioned in the embodiments of the present disclosure may also be referred to as a system-level chip, or a system chip, or a chip system, or a on-chip system chip, and the like. The processor mentioned above may be a general-purpose processor, a digital signal processor (DSP), a field programmable gate array (FPGA), an application specific integrated circuit (ASIC) or other programmable logic device, a transistor logic device, a discrete hardware component, or the like. Among them, the general-purpose processor mentioned above may be a microprocessor or any conventional processor or the like. The memory mentioned above may be a volatile memory or a non-volatile memory, or may include both volatile and non-volatile memory. The non-volatile memory may be a read-only memory (ROM), a programmable read-only memory (PROM), an erasable PROM (EPROM), an electrically erasable programmable read-only memory (EEPROM), or a flash memory. The volatile memory may be a random access memory (RAM). It should be understood that the above memory is illustrative but not limiting, for example, the memory in the embodiments of the present disclosure may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present disclosure is intended to include, but is not limited to, these and any other suitable type of memory.

FIG. 21 is a schematic block diagram of a communication system 2100 according to an embodiment of the present disclosure. The communication system 2100 includes a first terminal 2130, a first network device 2110, a second terminal 2140, and a second network device 2120. Here, the first terminal 2130 may be used to implement corresponding functions implemented by the first terminal in the above methods. The second terminal 2140 may be used to implement corresponding functions implemented by the second terminal in the above-described methods. The first network device 2110 may be used to implement corresponding functions implemented by the first network device in the above-described methods. The second network device 2120 may be used to implement corresponding functions implemented by the second network device in the methods described above. For the sake of brevity, it will not be repeated here.

The embodiments described above may be implemented in whole or in part by software, hardware, firmware, or any combination thereof. When implemented using software, it may be implemented in whole or in part in the form of a computer program product. The computer program product includes one or more computer indications. When the computer program indications are loaded and executed on a computer, the processes or functions according to the embodiments of the present disclosure are generated in whole or in part. The computer may be a general purpose computer, a special purpose computer, a computer network, or other programmable device. The computer indications may be stored in a computer-readable storage medium or transmitted from one computer-readable storage medium to another computer-readable storage medium, for example, the computer indications may be transmitted from one website site, computer, server, or data center by wired (e.g., coaxial cable, optical fiber, Digital Subscriber Line (DSL)) or wireless (e.g., infrared, wireless, microwave, etc.) means to another website site, computer, server, or data center. The computer-readable storage medium may be any available medium accessible by a computer or a data storage device such as a server, a data center, or the like that contains one or more available media integrations. The available medium may be a magnetic medium (e.g., a floppy disk, a hard disk, a magnetic tape), an optical medium (e.g., a DVD), or a semiconductor medium (e.g., a Solid State Disk (SSD)), etc.

It should be understood that in various embodiments of the present disclosure, the sequence numbers of the above-described processes do not mean the sequence of execution, and the sequence of execution of each process should be determined by its function and inherent logic, and should not constitute any limitation on the implementation of the embodiments of the present disclosure. Those skilled in the art can clearly understand that for convenience and conciseness of the description, the specific working processes of the systems, devices, and units described above may refer to the corresponding processes in the aforementioned method embodiments, and will not be repeatedly described herein. The above is merely a specific embodiment of the present disclosure, but the scope of protection of the present disclosure is not limited thereto, and any person skilled in the art can easily think of changes or substitutions within the technical scope disclosed in the present disclosure, and should be covered within the scope of protection of the present disclosure. Therefore, the scope of protection of this application should be based on the scope of protection of this claim.

## Claims

1. A communication method, comprising:
transmitting, by a first terminal, first information, wherein the first information is configured to request allocation of user equipment (UE) policies related to UE policies of other terminals; and
receiving, by the first terminal, second information, wherein the second information comprises UE policies of the first terminal, and the UE policies of the first terminal are related to UE policies of a second terminal.

2. The method of claim 1, wherein the UE policies of the first terminal comprise at least one of followings: a first UE-policy part of UE policies related to the second terminal, and UE policies related to a second UE-policy part of the UE policies related to the second terminal.

3. The method of claim 2, wherein the UE policies related to the second terminal comprise at least one of followings:
at least part of UE policies corresponding to the second terminal;
at least part of UE policies corresponding to a first service run by the second terminal; and
at least part of UE policies corresponding to a first user using the second terminal.

4. The method of claim 2 or 3, wherein the second information further comprises selection indication information which indicates at least one of a UE policy used by the second terminal and a UE policy preferentially selected by the first terminal.

5. The method of claim 4, wherein after the first terminal receives the second information, the method further comprises:
selecting, by the first terminal, the UE policy used by the first terminal from the UE policies of the first terminal based on the selection indication information.

6. The method of any one of claims 1-5, wherein the first information comprises a first identifier, wherein the first identifier comprises at least one of followings: an identifier of the second terminal, an identifier of a first service, and an identifier of a first user.

7. The method of any one of claims 1-6, wherein the first information is carried by an uplink UE policy container; and the second information is carried by a downlink UE policy container.

8. The method of any one of claims 1-7, further comprising:
transmitting, by the first terminal, an indication of a first capability, wherein the indication of the first capability is configured to indicate that the first terminal has the first capability, and the first capability comprises at least one of followings:
a capability to support or allow allocation of UE policies related to the UE policies of the first terminal to other terminals, and a capability to support or allow allocation of UE policies related to the UE policies of other terminals to the first terminal.

9. The method of claim 8, wherein after the first terminal transmits the indication of the first capability, the method further comprises:
receiving, by the first terminal, a first indication, wherein the first indication indicates at least one of followings:
whether the first terminal is allowed to allocate UE policies related to the UE policies of the first terminal to other terminals; and
whether the first terminal is allowed to be allocated with UE policies related to the UE policies of other terminals.

10. The method of claim 8 or 9, wherein after the first terminal transmits the indication information of the first capability, the method further comprises:
receiving, by the first terminal, third information, wherein the third information comprises UE policies of the first terminal available for allocation to other terminals.

11. The method of claim 10, wherein the indication of the first capability is carried by an uplink UE policy container; and the third information is carried by a downlink UE policy container.

12. The method of claim 7 or 10, wherein the uplink UE policy container comprises at least one of an uplink UE policy container in a registration request message and an uplink UE policy container in a registration update message; and
the downlink UE policy container is a downlink UE policy container in a UE configuration update (UCU) procedure.

13. A communication method, comprising:
receiving, by a first network device, first information, wherein the first information is configured to request allocation of user equipment (UE) policies related to UE policies of other terminals for a first terminal; and
transmitting, by the first network device, second information, wherein the second information comprises UE policies of the first terminal, and the UE policies of the first terminal are related to UE policies of a second terminal.

14. The method of claim 13, wherein the UE policies of the first terminal comprise at least one of followings: a first UE-policy part of UE policies related to the second terminal; and UE policies related to a second UE-policy part of the UE policies related to the second terminal.

15. The method of claim 14, wherein the UE policies related to the second terminal comprise at least one of followings: at least part of UE policies corresponding to the second terminal; at least part of UE policies corresponding to a first service run by the second terminal, and at least part of UE policies corresponding to a first user using the second terminal.

16. The method of claim 14 or 15, wherein the second information further comprises selection indication information which indicates at least one of: a UE policy used by the second terminal and a UE policy preferentially selected by the first terminal.

17. The method of any one of claims 13-16, wherein the first information comprises a first identifier, wherein the first identifier comprises at least one of followings: an identifier of the second terminal, an identifier of a first service, and an identifier of a first user.

18. The method of any one of claims 13-17, wherein after the first network device receives the first information, the method further comprises:
acquiring, by the first network device, UE policies related to the second terminal; and
generating, by the first network device, the UE policies of the first terminal based on the UE policies related to the second terminal.

19. The method of claim 18, wherein acquiring, by the first network device, the UE policies related to the second terminal comprises one of:
acquiring, by the first network device, the UE policies related to the second terminal from a second network device, wherein the second network device serves the second terminal;
acquiring, by the first network device, the UE policies related to the second terminal from a third network device.

20. The method of claim 18 or 19, further comprising:
acquiring, by the first network device, a policy update indication of the second terminal, wherein the policy update indication is used to determine a UE policy used by the second terminal from the UE policies of the second terminal.

21. The method of any one of claims 13-20, wherein the first information is carried by an uplink UE policy container, and the second information is carried by a downlink UE policy container.

22. The method of any one of claims 13-21, further comprising:
receiving, by the first network device, an indication of a first capability from the first terminal, wherein the indication of the first capability is configured to indicate that the first terminal has a first capability, and the first capability comprises at least one of followings: a capability to support or allow allocation of UE policies related to the UE policies of the first terminal to other terminals, and a capability to support or allow allocation of UE policies related to the UE policies of other terminals to the first terminal.

23. The method of claim 22, wherein after the first network device receives the indication of the first capability, the method further comprises:
transmitting, by the first network device, a first indication to the first terminal, wherein the first indication is configured to indicate at least one of followings: whether the first terminal is allowed to allocate UE policies related to the UE policies of the first terminal to other terminals; and whether the first terminal is allowed to be allocated with UE policies related to the UE policies of other terminals.

24. The method of claim 22 or 23, wherein after the first network device receives the second indication information, the method further comprises:
transmitting, by the first network device, third information, wherein the third information comprises UE policies of the first terminal available for allocation to other terminals.

25. The method of claim 24, wherein before the first network device transmits the third information, the method further comprises:
generating, by the first network device, the UE policies of the first terminal available for allocation to other terminals based on the first capability of the first terminal.

26. The method of claim 24 or 25, wherein the indication of the first capability is carried by an uplink UE policy container, and the third information is carried by a downlink UE policy container.

27. The method of claim 21 or 26, wherein the downlink UE policy container is a downlink UE policy container in a UE configuration update (UCU) procedure.

28. The method of claim 19, wherein the third network device comprises at least one of a unified data management function (UDM) and a unified data repository function (UDR); and
the second network device comprises a second policy control function (PCF).

29. The method of any one of claims 13-28, wherein the first network device comprises a first policy control function (PCF).

30. A communication method, comprising:
transmitting, by a second terminal, an indication of a first capability, wherein the indication of the first capability is configured to indicate that the second terminal has the first capability, and the first capability comprises at least one of: a capability to support or allow allocation of user equipment (UE) policies related to UE policies of the second terminal to other terminals, and a capability to support or allow allocation of UE policies related to UE policies of other terminals to the second terminal.

31. The method of claim 30, wherein, after the second terminal transmits the indication of the first capability, the method further comprises:
receiving, by the second terminal, a second indication, wherein the second indication indicates at least one of followings: whether the second terminal is allowed to allocate UE policies related to the UE policies of the second terminal to other terminals; and Whether the second terminal is allowed to be allocated with UE policies related to the UE policies of other terminals.

32. The method of claim 30 or 31, wherein, after the second terminal transmits the indication of the first capability, the method further comprises:
receiving, by the second terminal, fourth information, wherein the fourth information comprises UE policies corresponding to the second terminal, and the UE policies corresponding to the second terminal comprise UE policies available for allocation to other terminals.

33. The method of claim 32, wherein after the second terminal receives the fourth information, the method further comprises:
transmitting, by the second terminal, a policy update indication, wherein the policy update indication is used to determine a UE policy used by the second terminal from the UE policies corresponding to the second terminal.

34. The method of claim 32 or 33, wherein the indication of the first capability is carried by an uplink UE policy container, and the fourth information is carried by a downlink UE policy container.

35. The method of claim 34, wherein the uplink UE policy container comprises at least one of: an uplink UE policy container in a registration request message, and an uplink UE policy container in a registration update message; and
the downlink UE policy container is a downlink UE policy container in a UE configuration update (UCU) procedure.

36. A communication method, comprising:
receiving, by a second network device, an indication of a first capability of a second terminal, wherein the indication of the first capability is configured to indicate that the second terminal has the first capability, and the first capability comprises at least one of: a capability to support or allow allocation of user equipment (UE) policies related to UE policies of the second terminal to other terminals, and a capability to support or allow allocation of UE policies related to UE policies of other terminals to the second terminal.

37. The method of claim 36, wherein after the second network device receives the indication of the first capability of the second terminal, the method further comprises:
transmitting, by the second network device, a second indication, wherein the second indication indicates at least one of followings: whether the second terminal is allowed to allocate UE policies related to the UE policies of the second terminal to other terminals; and whether the second terminal is allowed to be allocated with UE policies related to the UE policies of other terminals.

38. The method of claim 36 or 37, wherein after the second network device receives the indication of the first capability of the second terminal, the method further comprises:
transmitting, by the second network device, fourth information, wherein the fourth information comprises UE policies corresponding to the second terminal, and the UE policies corresponding to the second terminal comprise UE policies available for allocation to other terminals.

39. The method of claim 38, wherein before the second network device transmits the fourth information, the method further comprises:
generating, by the second network device, the UE policies corresponding to the second terminal based on the first capability of the second terminal.

40. The method of claim 38 or 39, wherein the indication of the first capability is carried by an uplink UE policy container, and the fourth information is carried by a downlink UE policy container.

41. The method of claim 40, wherein the uplink UE policy container comprises at least one of: an uplink UE policy container in a registration request message, and an uplink UE policy container in a registration update message; and
the downlink UE policy container is a downlink UE policy container in a UE configuration update (UCU) procedure.

42. The method of claim 38 or 39, wherein after the second network device transmits the fourth information, the method further comprises:
receiving, by the second network device, a policy update indication, wherein the policy update indication is used to determine a UE policy used by the second terminal from the UE policies of the second terminal.

43. The method of any one of claims 36-42, wherein the second network device comprises a second policy control function (PCF).

44. A first terminal, comprising: a first communication unit, configured to:
transmit first information, wherein the first information is configured to request allocation of user equipment (UE) policies related to UE policies of other terminals; and
receive second information, wherein the second information comprises UE policies of the first terminal, the UE policies of the first terminal being related to UE policies of a second terminal.

45. The first terminal of claim 44, wherein the UE policies of the first terminal comprise at least one of followings: a first UE-policy part of UE policies related to the second terminal; and UE policies related to a second UE-policy part of the UE policies related to the second terminal.

46. The first terminal of claim 45, wherein the UE policies related to the second terminal comprise at least one of followings: at least part of UE policies corresponding to the second terminal; at least part of UE policies corresponding to a first service run by the second terminal; and at least part of UE policies corresponding to a first user using the second terminal.

47. The first terminal of claim 45 or 46, wherein the second information further comprises selection indication information which indicates at least one of a UE policy used by the second terminal and a UE policy preferentially selected by the first terminal.

48. The first terminal of claim 47, wherein the first terminal further comprises a first processing unit configured to select the UE policy used by the first terminal from the UE policies of the first terminal based on the selection indication information.

49. The first terminal of any one of claims 44-48, wherein the first information comprises a first identifier, wherein the first identifier comprises at least one of followings: an identifier of the second terminal, an identifier of a first service, and an identifier of a first user.

50. The first terminal of any one of claims 44-49, wherein the first information is carried by an uplink UE policy container; and the second information is carried by a downlink UE policy container.

51. The first terminal of any one of claims 44-50, wherein the first communication unit is configured to transmit an indication of a first capability, wherein the indication of the first capability is configured to indicate that the first terminal has the first capability, and the first capability comprises at least one of: a capability to support or allow allocation of UE policies related to the UE policies of the first terminal to be allocated to other terminals, and a capability to support or allow allocation of UE policies related to the UE policies of other terminal to the first terminal.

52. The first terminal of claim 51, wherein the first communication unit is configured to receive a first indication, wherein the first indication is configured to indicate at least one of followings: whether the first terminal is allowed to allocate UE policies related to the UE policies of the first local terminal to other terminals; and whether the first terminal is allowed to be allocated with UE policies related to the UE policies of other terminals.

53. The first terminal of claim 51 or 52, wherein the first communication unit is configured to receive third information, wherein the third information comprises UE policies of the first terminal available for allocation to other terminals.

54. The first terminal of claim 53, wherein the indication of the first capability is carried by an uplink UE policy container; and the third information is carried by a downlink UE policy container.

55. The first terminal of claim 50 or 53, wherein the uplink UE policy container comprises at least one of an uplink UE policy container in a registration request message and an uplink UE policy container in a registration update message; and
the downlink UE policy container is a downlink UE policy container in a UE configuration update (UCU) procedure.

56. A first network device, comprising: a second communication unit, configured to:
receive first information, wherein the first information is configured to request allocation of user equipment (UE) policies related to UE policies of other terminals for a first terminal; and
transmit second information, wherein the second information comprises UE policies of the first terminal, and the UE policies of the first terminal are related to UE policies of a second terminal.

57. The first network device of claim 56, wherein the UE policies of the first terminal comprise at least one of followings: a first UE-policy part of UE policies related to the second terminal; and UE policies related to a second UE-policy part of the UE policies related to the second terminal.

58. The first network device of claim 57, wherein the UE policies related to the second terminal comprise at least one of followings: at least part of UE policies corresponding to the second terminal; at least part of UE policies corresponding to a first service run by the second terminal; and at least part of UE policies corresponding to a first user using the second terminal.

59. The first network device of claim 57 or 58, wherein the second information further comprises selection indication information which indicates at least one of: a UE policy used by the second terminal and a UE policy preferentially selected by the first terminal.

60. The first network device according to any one of claims 56-59, wherein the first information comprises a first identifier, wherein the first identifier comprises at least one of followings: an identifier of the second terminal, an identifier of a first service, and an identifier of a first user.

61. The first network device of any one of claims 56-60, wherein the first network device further comprises a second processing unit, wherein
the second processing unit is configured to generate the UE policies of the first terminal based on UE policies related to the second terminal; and
the second communication unit is configured to acquire the UE policies related to the second terminal.

62. The first network device of claim 61, wherein the second communication unit is configured to:
acquire the UE policies related to the second terminal from a second network device, wherein the second network device serves the second terminal; or
acquire the UE policies related to the second terminal from a third network device.

63. The first network device of claim 61 or 62, wherein the second communication unit is configured to acquire a policy update indication of the second terminal, wherein the policy update indication is used to determine a UE policy used by the second terminal from the UE policies of the second terminal.

64. The first network device of any one of claims 56-63, wherein the first information is carried by an uplink UE policy container; and the second information is carried by a downlink UE policy container.

65. The first network device according to any one of claims 56-64, wherein the second communication unit is configured to receive an indication of a first capability from the first terminal, wherein the indication of the first capability is configured to indicate that the first terminal has the first capability, and the first capability comprises at least one of: a capability to support or allow allocation of UE policies related to the UE policies of the first terminal to other terminals, and a capability to support or allow allocation of UE policies related to the UE policies of other terminals to the first terminal.

66. The first network device of claim 65, wherein the second communication unit is configured to transmit a first indication to the first terminal, wherein the first indication is configured to indicate at least one of followings: whether the first terminal is allowed to allocate UE policies related to the UE policies of the first terminal to other terminals; and whether the first terminal is allowed to be allocated with UE policies related to the UE policies of other terminals.

67. The first network device of claim 65 or 66, wherein the second communication unit is configured to transmit third information, wherein the third information comprises UE policies of the first terminal available for allocation to other terminals.

68. The first network device of claim 67, wherein the second processing unit is configured to generate the UE policies of the first terminal available for allocation to other terminals based on the first capability of the first terminal.

69. The first network device of claim 67 or 68, wherein the indication of the first capability is carried by an uplink UE policy container; and the third information is carried by a downlink UE policy container.

70. The first network device of claim 64 or 69, wherein the downlink UE policy container is a downlink UE policy container in a UE configuration update (UCU) procedure.

71. The first network device of claim 62, wherein the third network device comprises at least one: a unified data management function (UDM), and a unified data repository function (UDR); and the second network device comprises a second policy control function (PCF).

72. The first network device of any one of claims 56-71, wherein the first network device comprises a first policy control function (PCF).

73. A second terminal, comprising:
a third communication unit, configured to transmit an indication of a first capability, wherein the indication of the first capability is configured to indicate that the second terminal has the first capability, and the first capability comprises at least one of: a capability to support or allow allocation of user equipment (UE) policies related to UE policies of the second terminal to other terminals, and a capability to support or allow allocation of UE policies related to UE policies of other terminals to the second terminal.

74. The second terminal of claim 73, wherein the third communication unit is configured to receive a second indication, wherein the second indication is configured to indicate at least one: whether the second terminal is allowed to allocate UE policies related to the UE policies of the second terminal to other terminals; and whether the second terminal is allowed to be allocated with UE policies related to the UE policies of other terminals.

75. The second terminal of claim 73 or 74, wherein the third communication unit is configured to receive fourth information, wherein the fourth information comprises UE policies corresponding to the second terminal, and the UE policies corresponding to the second terminal comprise UE policies available for allocation to other terminals.

76. The second terminal of claim 75, wherein the third communication unit is configured to transmit a policy update indication, wherein the policy update indication is used to determine a UE policy used by the second terminal from the UE policies corresponding to the second terminal.

77. The second terminal of claim 75 or 76, wherein the indication of the first capability is carried by an uplink UE policy container; and the fourth information is carried by a downlink UE policy container.

78. The second terminal of claim 77, wherein the uplink UE policy container comprises at least one: an uplink UE policy container in a registration request message, and an uplink UE policy container in a registration update message; and the downlink UE policy container is a downlink UE policy container in a UE configuration update (UCU) procedure.

79. A second network device, comprising:
a fourth communication unit, configured to receive an indication of a first capability of a second terminal, wherein the indication of the first capability is configured to indicate that the second terminal has the first capability, and the first capability comprises at least one of: a capability to support or allow allocation of user equipment (UE) policies related to UE policies of the second terminal to other terminals, and a capability to support or allow allocation of UE policies related to UE policies of other terminals to the second terminal.

80. The second network device of claim 79, wherein the fourth communication unit is configured to transmit a second indication, wherein the second indication is configured to indicate at least one of followings: whether the second terminal is allowed to allocate UE policies related to the UE policies of the second terminal to other terminals; and whether the second terminal is allowed to be allocated with UE policies related to the UE policies of other terminals.

81. The second network device of claim 79 or 80, wherein the fourth communication unit is configured to transmit fourth information, wherein the fourth information comprises UE policies corresponding to the second terminal, and the UE policies corresponding to the second terminal comprise UE policies available for allocation to other terminals.

82. The second network device of claim 81, wherein the second network device further comprises a fourth processing unit configured to generate the UE policies corresponding to the second terminal based on the first capability of the second terminal.

83. The second network device of claim 81 or 82, wherein the indication of the first capability is carried by an uplink UE policy container; and the fourth information is carried by a downlink UE policy container.

84. The second network device of claim 83, wherein the uplink UE policy container comprises at least one of: an uplink UE policy container in a registration request message, and an uplink UE policy container in a registration update message; and the downlink UE policy container is a downlink UE policy container in a UE configuration update (UCU) procedure.

85. The second network device of claim 81 or 82, wherein the fourth communication unit is configured to receive a policy update indication, wherein the policy update indication is used to determine a UE policy used by the second terminal from the UE policies of the second terminal.

86. The second network device of any one of claims 79-85, wherein the second network device comprises a second policy control function (PCF).

87. A first terminal, comprising: a transceiver, a processor, and a memory, wherein the memory is configured to store a computer program, the transceiver is configured to communicate with other devices, and the processor is configured to call and run the computer program stored in the memory to cause the first terminal to perform the method according to any one of claims 1 to 12.

88. A first network device, comprising: a transceiver, a processor, and a memory, wherein the memory is configured to store a computer program, the transceiver is configured to communicate with other devices, and the processor is configured to call and run the computer program stored in the memory to cause the first network device to perform the method according to any one of claims 13 to 29.

89. A second terminal, comprising: a transceiver, a processor, and a memory, wherein the memory is configured to store a computer program, the transceiver is configured to communicate with other devices, and the processor is configured to call and run the computer program stored in the memory to cause the second terminal to perform the method according to any one of claims 30 to 35.

90. A second network device, comprising: a transceiver, a processor, and a memory, wherein the memory is configured to store a computer program, the transceiver is configured to communicate with other devices, and the processor is configured to call and run the computer program stored in the memory to cause the second network device to perform the method according to any one of claims 36 to 43.

91. A chip, comprising: a a processor, configured to call and run a computer program from a memory to cause a device equipped with the chip to perform the method according to any one of claims 1 to 12, or any one of claims 13 to 29, or any one of claims 30 to 35, or any one of claims 36 to 43.

92. A computer-readable storage medium, configured to store a computer program that, when run by the computer program, causes the device to perform the method according to any one of claims 1 to 12, or any one of claims 13 to 29, or any one of claims 30 to 35, or any one of claims 36 to 43.

93. A computer program product, comprising computer program indications, wherein the computer program indications cause a computer to perform the method according to any one of claims 1 to 12, or any one of claims 13 to 29, or any one of claims 30 to 35, or any one of claims 36 to 43.

94. A computer program that causes a computer to perform the method of any one of claims 1 to 12, or any one of claims 13 to 29, or any one of claims 30 to 35, or any one of claims 36 to 43.
